# EUROPÄISCHE PATENTSCHRIFT

(11) **EP 3 421 964 B1**
(45) Veröffentlichungstag und Bekanntmachung des Hinweises auf die Patenterteilung: **24.02.2021**
(21) Anmeldenummer: 18180555.7
(22) Anmeldetag: 28.06.2018
(51) Int. Cl.: G01M 7/02, G01M 5/00, G01H 1/00, E04G 21/32, G01H 1/06, A62B 35/00, E04G 5/06

(54) **VERFAHREN UND VORRICHTUNG ZUR BEWERTUNG DER VERBINDUNGSQUALITÄT VON ANSCHLAGEINRICHTUNGEN**
METHOD AND DEVICE FOR ASSESSING THE CONNECTION QUALITY OF ANCHOR DEVICES
PROCÉDÉ ET DISPOSITIF D'ÉVALUATION DE LA QUALITÉ DE LIAISON DE DISPOSITIFS D'ANCRAGE

(30) Priorität: 30.06.2017 DE 102017114651; 18.06.2018 DE 202018103419 U
(43) Veröffentlichungstag der Anmeldung: 02.01.2019
(73) Patentinhaber: Hachenberg, Rudi, 42289 Wuppertal (DE); Hachenberg, Simone, 42929 Wermelskirchen (DE)
(72) Erfinder: HACHENBERG, Rudi, 42929 Wemelskirchen (DE); MÜLLER, Ulf, Dr.-Ing., 47269 Duisburg (DE); FELLER, Nico, 50354 Hürth (DE); SPITZ, Tilmann Dieter, 50677 Köln (DE)
(74) Vertreter: Freischem & Partner Patentanwälte mbB

(56) Entgegenhaltungen:
- EP-A1- 1 236 996
- DE-A1- 2 806 785
- US-A- 4 062 227
- US-A1- 2017 138 908
- Fachausschuss Persönliche Schutzausrüstungen: "Präventionsleitlinie "Durchführung von Sachkundigenprüfungen an Anschlageinrichtungen"", , 1. Mai 2011 (2011-05-01), XP055520991, Berlin Gefunden im Internet: URL:https://www.dguv.de/medien/fb-psa/de/r egelwerk/leitlinien/praevleit_sachkund.pdf [gefunden am 2018-11-05]

## Beschreibung

Die Erfindung betrifft eine Vorrichtung und ein Verfahren zur Bewertung der Verbindungsqualität von Anschlageinrichtungen. Unter Anschlageinrichtungen im Sinne der Erfindung werden zum einen alle Einrichtungen verstanden, die Gegenstand der Deutschen Norm DIN EN 795:2012 und im Nutzzustand fest mit einer baulichen Einrichtung verbunden sind. Auf diese Norm sowie auf die ergänzende Norm DIN EN 365:2004 wird hiermit vollumfänglich verwiesen, insbesondere auf den Typ A von Anschlageinrichtungen gemäß Seite 9, nämlich eine "Anschlageinrichtung, die, wenn sie montiert ist, einen oder mehrere ortsfeste(n) Anschlagpunkt(e) enthält und für deren Befestigung an der baulichen Einrichtung (ein) baulich verankerte(s) Befestigungsmittel oder (ein) Befestigungselement(e) erforderlich ist/sind" und gemäß den Bildern 3 und 4 auf Seite 11 der Norm. Unter Anschlageinrichtungen im Sinne der Erfindung werden zum anderen aber auch solche Anschlageinrichtungen verstanden, die nicht Gegenstand der Norm DIN EN 795:2012 und im Nutzzustand ebenfalls fest mit einer baulichen Einrichtung verbunden sind, insbesondere solche, wie sie auf Seite 9 der Norm in den Bildern 2a, 2b, 2c und 2d gezeigt sind sowie Gerüstverankerungen. Das erfindungsgemäße Verfahren kann auch in Verbindung mit solchen Anschlageinrichtungen durchgeführt werden.

Aus US 2017/0138908 A1 ist ein System zur Diagnose eines Ankerbolzens bekannt, wobei dem Ankerbolzen mittels eines Hammers ein Schlag versetzt wird. An dem Hammer ist ein Beschleunigungssensor angeordnet und an dem Ankerbolzen selbst werden Vibrationssensoren angeordnet. Aus dem Verhältnis von Schlaghärte des Hammers und Vibrationsstärke soll ermittelt werden, ob der Ankerbolzen intakt ist.

Aus der Präventionsleitlinie "Durchführung von Sachkundigenprüfungen an Anschlageinrichtungen" des Fachausschusses Persönliche Schutzausrüstungen vom 1. Mai 2011, abgerufen unter https://www.dguv.de/medien/fbpsa/de/regelwerk/leitlinien/praevleit sachkund.pdf am 11.06.2019 sind verschiedene Möglichkeiten zur Überprüfung einer Anschlageinrichtung mit einem Anschlagpunkt beschrieben. Hier werden entweder eine Sichtprüfung, eine Rüttel-, Torsions- oder Schlagprobe sowie eine Prüfung mit Drehmoment beschrieben.

Aus US 4,062,227 A ist eine Vorrichtung bekannt, mittels welcher der Dehnungszustand einer Schraube ermittelt werden soll. Dazu wird die Schraube mit einem Ultraschallsignal angeregt und die reflektierten Ultraschallwellen gemessen. Aus einer Verschiebung der Resonanzfrequenz soll auf den Dehnungszustand der Schraube geschlossen werden.

Die Erfindung betrifft insbesondere solche Anschlageinrichtungen, die mit mindestens einem Ende an einer baulichen Einrichtung lösbar oder nicht lösbar befestigt sind, insbesondere an einem Gebäude. Dabei wird insbesondere ein Ende der Anschlageinrichtung zur eindringenden oder durchdringenden Befestigung genutzt und das andere Ende stellt einen Anschlagpunkt bereit. Der Anschlagpunkt ist dabei üblicherweise von der baulichen Einrichtung bzw. dem Gebäude beabstandet, insbesondere aufgrund eines stabartigen Abschnitts, der aus der baulichen Einrichtung bzw. aus dem Gebäude herausragt. Die Befestigung kann dabei insbesondere kraftschlüssig, stoffschlüssig und/oder formschlüssig erfolgen. Sie können ferner lösbar oder nicht lösbar sein. Im Speziellen wird auf Schraubverbindungen, Schweißverbindungen, verspannte Verbindungen und/oder Pressverbindungen verwiesen.

Das erfindungsgemäße Verfahren ist auch anwendbar auf Anschlageinrichtungen, die mit zwei oder mehr Bereichen (z.B. mit zwei Enden) an einer baulichen Einrichtung (insbesondere einem Gebäude) befestigt sind, aber einen von der baulichen Einrichtung beabstandeten Bereich mit einem Anschlagpunkt aufweisen, der schwingfähig ist. Nur beispielhaft wird diesbezüglich auf ein hufeisenförmiges Element verwiesen, das mit seinem Endbereich an einer baulichen Einrichtung eingespannt ist und im mittleren Bereich des Bogens als Anschlagpunkt eine Öse zum Einhängen einer persönlichen Absturzausrüstung aufweist.

Die Erfindung betrifft insbesondere eine Vorrichtung zur Bewertung der Verbindungsqualität von wie vorstehend angegebenen Anschlageinrichtungen, insbesondere Vorrichtungen zur Durchführung der im Folgenden noch beschriebenen Verfahren.

Unter Anschlageinrichtungen im Sinne der Erfindung werden insoweit insbesondere einzelne Elemente oder eine Anordnung mehrerer Elemente bezeichnet, die zur Benutzung fest mit einer baulichen Einrichtung, insbesondere einem Gebäude verbunden sind. Solche Anschlageinrichtungen zählen zur persönlichen Schutzausrüstung von Arbeitern, welche an nicht vom Boden aus erreichbaren Orten eines Gebäudes, insbesondere auf dem Dach, Renovierungs-, Wartungs-, Reparatur- oder sonstige Arbeiten durchführen möchten. Ein solcher Arbeiter muss mittels Seilen oder ähnlichen Sicherungsmitteln an dem Gebäude gegen Abstürzen gesichert sein, insbesondere durch Verbindung des Sicherungsmittels mit einer oder mehreren Anschlageinrichtungen. Eine Anschlageinrichtung weist dazu üblicherweise, insbesondere an von dem Gebäude beabstandeten Bereich, eine Öse, einen Haken oder eine ähnliche Gestaltung auf, um das Sicherungsmittel befestigen zu können und ist zumindest mit einem Ende an dem Gebäude befestigt. Wenn nur ein Ende mit dem Gebäude verbunden, d.h. die Anschlageinrichtung einseitig eingespannt ist, und die Anschlageinrichtung ein bei bestimmungsgemäßer Verwendung formstabiles Element ist, kann diese Anschlageinrichtung als einseitig eingespannter Biegebalken mit mehreren Eigen- bzw. Resonanzfrequenzen und daraus resultierenden Eigenschwingungsformen betrachtet werden. Die Erfindung wurde insbesondere für solche Anschlageinrichtungen gemacht, kann aber auch in Verbindung mit anderen Anschlageinrichtungen realisiert werden, insbesondere mit zweiseitig oder mehrseitig eingespannten schwingungsfähigen Bauelementen.

Persönliche Schutzausrüstung und Anschlageinrichtungen sind regelmäßig zu überprüfen, und die Überprüfung ist in einem Protokoll festzuhalten. Die Art der Überprüfung ist dabei nicht festgelegt. In DIN EN 795:2012-10 wird zur Überprüfung der Verbindungsqualität vorgeschlagen, entweder eine Sichtprüfung der Anschlageinrichtung vorzunehmen oder - falls die Befestigung nicht einsehbar ist - die Verbindungsqualität mittels Rüttelproben und/oder Belastungsversuchen zu überprüfen. Eine durch die Rüttelprobe oder den Belastungsversuch möglicherweise verursachte Lockerung und damit Verschlechterung der Verbindungsqualität zwischen der Anschlageinrichtung und dem Gebäude kann dabei nicht ausgeschlossen werden und ist insoweit zu vermeiden.

Die zugrundeliegende Aufgabe der Erfindung ist es, eine Vorrichtung und ein Verfahren zur Bewertung der Verbindungsqualität zwischen einer Anschlageinrichtung und einer baulichen Einrichtung, insbesondere einem Gebäude, zur Verfügung zu stellen, mittels welchen die Überprüfung der Verbindung einfach, sicher, wiederholbar und zerstörungsfrei erfolgen kann.

Die Aufgabe wird erfindungsgemäß mit den Merkmalen der unabhängigen Ansprüche gelöst. Weitere praktische Ausführungsformen und Vorteile sind in Verbindung mit den abhängigen Ansprüchen beschrieben.

Ein erfindungsgemäßes Verfahren zur Bewertung der Verbindungsqualität zwischen einer mit einem Ende an einer baulichen Einrichtung, insbesondere einem Gebäude, befestigten Anschlageinrichtung und der baulichen Einrichtung umfasst folgende Verfahrensschritte:
a) externe Schwingungsanregung der Anschlageinrichtung in einem an der baulichen Einrichtung angebautem Zustand mit verschiedenen Anregungsfrequenzen,
b) Messen der in die Anschlageinrichtung eingebrachten Kräfte und der daraus resultierenden Schwingungen und Berechnen des Übertragungsfrequenzgangs der Anschlageinrichtung,
c) Ermitteln mindestens einer Eigen- bzw. Resonanzfrequenz der Anschlageinrichtung anhand des Übertragungsfrequenzganges,
d) Ermitteln der Resonanzamplitude des Übertragungsfrequenzgangs und der korrespondierenden Dämpfung der zuvor ermittelten mindestens einen Eigen- bzw. Resonanzfrequenz der Anschlageinrichtung,
e) Vergleichen der mindestens einen ermittelten Eigen- oder Resonanzfrequenz mit mindestens einer Referenzeigen- bzw. Resonanzfrequenz der Anschlageinrichtung unter Berücksichtigung der Art der Befestigung der Anschlageinrichtung und/oder unter Berücksichtigung des Anschlageinrichtungstyps zur Bewertung der Verbindungsqualität.
f) Vergleichen der mindestens einen Resonanzamplitude und der korrespondierenden Dämpfung mit mindestens einer zu der Referenzeigen- bzw. Referenzresonanzfrequenz korrespondierenden Resonanzamplitude und Dämpfung der Anschlageinrichtung unter Berücksichtigung der Art der Befestigung der Anschlageinrichtung und/oder unter Berücksichtigung des Anschlageinrichtungstyps zur Bewertung der Verbindungsqualität.

Dabei ist die Anschlageinrichtung vorzugsweise im Bereich eines Dachs oder eines Dachaufbaus eines Gebäudes fest und dauerhaft installiert. Die Anschlageinrichtung kann lösbar installiert sein, insbesondere in Form einer Verschraubung oder Verspannung. Alternativ kann es sich bei der Anschlageinrichtung auch um eine nicht lösbare Verbindung handeln, beispielsweise um eine verschweißte, vernietete oder anders gestaltete Verbindung.

Diese Verfahrensschritte a) bis f) werden vorzugsweise zumindest einmal in der genannten Reihenfolge durchgeführt. Sie können auch mehrmals hintereinander durchgeführt werden, insbesondere um einen Einfluss etwaiger nur temporär auftretender Störgrößen auszuschließen.

Zur Überprüfung der Verbindungsqualität zwischen der Anschlageinrichtung und der baulichen Einrichtung, insbesondere einer Gerüstverankerung und der baulichen Einrichtung, insbesondere dem Gebäude, wird die Anschlageinrichtung in einem an der baulichen Einrichtung befestigten Zustand (d.h. in der Praxis üblicherweise so, wie eine vor Ort permanent installierte Anschlageinrichtung von einer Person vorgefunden wird) in einem ersten Verfahrensschritt a) extern mit verschiedenen Anregungsfrequenzen zum Schwingen angeregt. Die Erzeugung von Schwingungen kann dabei mit sehr geringer Krafteinwirkung erfolgen. Die Kraft muss lediglich ausreichend groß sein, um für die Durchführung des Verfahrens Schwingungen mit einer Amplitude zu erzeugen, die mit entsprechenden Sensoren auswertbar ist.

Die Erzeugung von Schwingungen kann berührungsbehaftet mittels eines geeigneten Aktors erfolgen, der unmittelbar mit der Anschlageinrichtung verbunden ist. In diesem Fall erfolgt die Schwingungsanregung insbesondere über eine Vorrichtung, die unmittelbar an der Anschlageinrichtung befestigt ist.

Alternativ oder in Ergänzung kann die Erzeugung von Schwingungen auch berührungslos über einen Aktor erfolgen, der ausreichend nah an der Anschlageinrichtung installiert ist, um diese in Schwingung zu versetzen. In diesem Fall erfolgt die Schwingungsanregung in einem an der Anschlageinrichtung nicht befestigten Zustand. Diesbezüglich wird insbesondere auf die Möglichkeiten verwiesen, die Anschlageinrichtung magnetisch und/oder akustisch zum Schwingen anzuregen.

Von der Erfindung umfasst sind insoweit sowohl berührungsbehaftete als auch berührungslose technische Lösungen zur Schwingungsanregung, insbesondere mittels geeigneter Vorrichtungen. Ebenfalls umfasst sind Lösungen, die teilweise berührungsbehaftet und teilweise berührungslos arbeiten, wie z.B. die feste Verbindung eines Magneten oder eines ferromagnetischen Elements mit einer Anschlageinrichtung (insbesondere einer Anschlageinrichtung, die selbst aus einem nicht oder nicht ausreichend ferromagnetischen Werkstoff hergestellt ist) und die berührungslose magnetische Schwingungsanregung der Anschlageinrichtung.

Derartige Schwingungen sind mit einer nur geringen Belastung der Anschlageinrichtung und der Verbindung zwischen Anschlageinrichtung und baulicher Einrichtung sowie mit kleinen Schwingungsamplituden der Anschlageinrichtung verbunden. Es ist daher nahezu ausgeschlossen, dass die Schwingungsanregung sich nachteilig auf die Verbindung zwischen der Anschlageinrichtung und der baulichen Einrichtung (insbesondere des Gebäudes) auswirkt. Bevorzugt werden Schwingungsamplituden in einer Intensität erzeugt, die mit dem menschlichen Auge nicht wahrnehmbar ist. Ebenfalls bevorzugt ist es, wenn die externe Schwingungsanregung geräuschlos oder nahezu geräuschlos durchgeführt wird.

In Schritt c) wird mindestens eine Eigen- bzw. Resonanzfrequenz ermittelt, insbesondere die Eigen- bzw. Resonanzfrequenz erster Ordnung. Dies kann beispielsweise in bekannter Art und Weise mit Hilfe geeigneter Messungen und einer anschließenden Fouriertransformation erfolgen.

Zur Überprüfung der Verbindungsqualität wird in den Verfahrensschritten e) und f) zur Bewertung der Verbindungsqualität die mindestens eine ermittelte Eigen- bzw. Resonanzfrequenz und deren korrespondierende Resonanzamplitude und deren Dämpfung mit mindestens einer vorab ermittelten und zum Vergleich bereitgestellten Referenzeigen- bzw. Referenzresonanzfrequenz und deren korrespondierenden Amplitude und Dämpfung verglichen. Dies erfolgt unter Berücksichtigung der Art der Befestigung der Anschlageinrichtung an der baulichen Einrichtung und/oder unter Berücksichtigung des Anschlageinrichtungstyps, wobei an dieser Stelle noch einmal darauf verwiesen wird, dass Gerüstverankerungen auch als Anschlageeinrichtungen im Sinne dieser Offenbarung angesehen werden. Dementsprechend ist mit dem Begriff Anschlageinrichtungstyp auch ein Gerüstverankerungstyp gemeint, sofern es sich bei der Anschlageinrichtung um eine Gerüstverankerung handelt. Mit dem Wort "mindestens" wird dabei zum Ausdruck gebracht, dass der Vergleich auch mit mehreren Referenzeigen-bzw. Referenzresonanzfrequenzen und deren korrespondierenden Amplituden und Dämpfungswerten erfolgen kann, insbesondere mit einem ermittelten oder definierten Referenzeigen- bzw. Referenzresonanzfrequenzbereich.

Das Verfahren macht sich an dieser Stelle die Erkenntnis zunutze, dass die Verbindungsqualität - d.h. die Festigkeit der Verbindung zwischen der Anschlageinrichtung und der baulichen Einrichtung, welche in den meisten Fällen von dem Zustand der Verbindung in einem nicht sichtbaren und nicht oder nur schwer zugänglichen Verbindungsbereich zwischen Anschlageinrichtung und baulicher Einrichtung abhängt - einen Zusammenhang mit den ermittelbaren Eigen- bzw. Resonanzfrequenzen, den Resonanzamplituden und den korrespondierenden Dämpfungen der an der baulichen Einrichtung befestigten Anschlageinrichtung aufweist. Jede Anschlageinrichtung weist - wenn das Verfahren in Verbindung mit mehreren Anschlagseinrichtungstypen zur Anwendung kommt, in Abhängigkeit ihres Typs - und/oder - wenn ein Anschlageinrichtungstyp mit mehreren Verbindungsarten zur Anwendung kommt, in Abhängigkeit der Art der Verbindung - in ordnungsgemäßen Verbindungszuständen jeweils bestimmte Eigen- bzw. Resonanzfrequenzen mehrerer Ordnungen und damit korrespondierende Amplituden und Dämpfungen auf, d.h. die Eigen- bzw. Resonanzfrequenzen, die Amplituden und Dämpfungen jeder Ordnung liegen in einem bestimmten Referenzbereich, der zuvor festgelegt oder ermittelt wurde. Ein ordnungsgemäßer Verbindungszustand kann dabei zuvor auf geeignete Art und Weise definiert und die dazugehörigen Referenzeigen- bzw. Referenzresonanzfrequenzen (erster Ordnung oder anderer Ordnung oder mehrere Ordnungen) können ermittelt und gespeichert werden. So können beispielsweise im Falle einer verschraubten Anschlageinrichtung durch die Festlegung eines Bereiches zulässiger (ordnungsgemäßer) Anzugsdrehmomente ordnungsgemäße Verbindungszustände festgelegt werden. Diese können hergestellt, und unmittelbar im Anschluss können korrespondierende Referenzeigen- bzw. Referenzresonanzfrequenzen ermittelt werden.

Üblicherweise weist die Resonanzamplitude der Eigen- bzw. Resonanzfrequenzen bei vergleichbarer Anregung - abhängig von dem Anschlageinrichtungstyp und von der Art der Befestigung der Anschlageinrichtung - bei einer bestimmten "Maximum-Ordnung" ein absolutes Amplitudenmaximum auf. In der Praxis kann dies bei Anschlageinrichtungen beispielsweise die erste, zweite, dritte, vierte oder fünfte Eigen- bzw. Resonanzfrequenz sein, d.h. die Eigenfrequenz erster, zweiter, dritter, vierter oder fünfter Ordnung. Aus diesem Grund ist es bevorzugt, wenn die "Maximum-Ordnung" der Eigen- bzw. Resonanzfrequenz einer Anschlageinrichtung - ausschließlich oder zumindest auch - als Basis für das Verfahren verwendet wird, d.h. die Ordnung, in welcher die größte Amplitude vorliegt. In diesem Fall kann die Intensität der externen Schwingungsanregung gering gehalten werden und/oder die für die Ermittlung der Eigen- bzw. Resonanzfrequenzen erforderlichen Sensoren können hinsichtlich ihrer erforderlichen Auflösung und Genauigkeit einfach gehalten und somit kostengünstig beschafft werden.

Das beschriebene Verfahren ermöglicht eine zerstörungsfreie, akustisch und optisch nicht oder kaum wahrnehmbare externe Schwingungsanregung und eine darauf basierende, in wenigen Sekunden durchführbare Prüfung der Verbindungsqualität zwischen einer Anschlageinrichtung und einer baulichen Einrichtung, insbesondere einer baulichen Einrichtung in Form eines Gebäudes. Bezüglich der genannten Gebäude wird insbesondere auf die Überprüfung der Verbindungsqualität von fest im Bereich eines Dachs oder Dachaufbaus eines Gebäudes installierter Anschlageinrichtungen verwiesen.

Wie vorstehend erwähnt, sind die Eigen- bzw. Resonanzfrequenzen, mit welcher eine mit der baulichen Einrichtung verbundene Anschlageinrichtung schwingt, abhängig von dem Anschlageinrichtungstyp selbst und/oder von der Art der Befestigung.

Mit unterschiedlichen Anschlageinrichtungstypen sind dabei insbesondere sich in ihrer Geometrie (Länge, Durchmesser, Form etc.), ihres Werkstoffs, und ihrer Größe unterscheidende Anschlageinrichtungen gemeint.

Mit der Art der Befestigung der Anschlageinrichtung ist insbesondere gemeint, auf welche Art und Weise die Anschlageinrichtung verbunden ist (z.B. verschraubt, verschweißt, vergossen etc.), aus welchem Werkstoff oder welcher Werkstoffzusammensetzung die bauliche Einrichtung im Bereich der Verbindung zu der Anschlageinrichtung besteht (z.B. Beton, Holz, Stahl, Dämmmaterial etc.) und wie die geometrischen Einzelheiten der Verbindung im Einzelfall gestaltet sind (z.B. Länge der Einschraubtiefe etc.).

Um eine Bewertung der Verbindungsqualität der zu überprüfenden Anschlageinrichtung vorzunehmen, ist es erforderlich, für eine Anschlageinrichtung desselben Typs und mit derselben Art der Befestigung mindestens eine Referenzeigen- bzw- Referenzresonanzfrequenz oder einen Referenzeigen- bzw. Referenzresonanzfrequenzbereich sowie mindestens eine Resonanzamplitude und ihre korrespondierende Dämpfung oder einen Resonanzamplitudenbereich und ihren korrespondierenden Dämpfungsbereich bereitzustellen, insbesondere durch experimentelle Ermittlung und/oder durch Festlegung. Eine oder mehrere Referenzeigen- bzw. Referenzresonanzfrequenzen, die Resonanzamplitude und/oder mehrere Resonanzamplituden, jeweils mit der korrespondierenden Dämpfung, werden vorzugsweise vorab an einer Anschlageinrichtung ermittelt, welche gemäß den Herstellerangaben ordnungsgemäß befestigt und unbeschädigt ist.

Um dies sicherzustellen, können auch mehrere Tests durchgeführt und nur Messungen berücksichtigt werden, die eine zuvor festgelegte statistische Abweichung nicht überschreiten. Als Referenzeigen- bzw. Referenzresonanzfrequenz(en) oder Referenzeigen- bzw. Referenzresonanzfrequenzbereich(e) werden insoweit Soll-Frequenzen oder Soll-Frequenzbereiche festgelegt. Dementsprechend werden ebenfalls Soll-Amplituden oder Soll-Amplitudenbereiche mit jeweils den korrespondierenden Dämpfungen oder Dämpfungsbereichen festgelegt. Zulässige Abweichungen von diesen SollWerten können entweder experimentell ermittelt werden, wenn es sich um eine Verbindung handelt, die innerhalb eines variierbaren Wertebereichs als "i.O." (d.h. in Ordnung) gewertet werden kann. Nur exemplarisch wird diesbezüglich auf eine Anschlageinrichtung verwiesen, die mittels Schraubverbindung gegenüber der baulichen Einrichtung fixiert ist, wobei für die Schraubverbindung ein "i.O."-Bereich zwischen einem Minimum-Anzugsdrehmoment und einem Maximum-Anzugsdrehmoment festgelegt ist, beispielsweise seitens eines Herstellers der Anschlageinrichtung. So kann für mit dem Minimum-Anzugsdrehmoment befestigte Anschlageinrichtungen eine Minimum-Referenzeigen-bzw. Referenzresonanzfrequenz (z.B. die erster Ordnung oder mehrere solcher Minimum-Referenzeigen- bzw. Referenzresonanzfrequenzen, z.B. die erster und zweiter Ordnung) ermittelt werden und für mit dem Maximum-Anzugsdrehmoment befestigte Anschlageinrichtungen eine Maximum-Referenzeigen- bzw. Referenzresonanzfrequenz ermittelt werden, wobei jeder Frequenz auch eine - von der Anregung abhängige - entsprechende Resonanzamplitude und ihre korrespondierende Dämpfung zugeordnet ist.

Alternativ ist es möglich, eine konkrete Referenz-Eigen- bzw. ReferenzResonanzfrequenz auf der Grundlage nur eines bestimmten Soll-Anzugsdrehmoments mehrfach zu ermitteln und auf dieser Basis einen Referenz-Eigen- bzw. Referenz-Resonanzfrequenzbereich festzulegen, beispielsweise auf der Grundlage des gesamten ermittelten resultierenden Frequenzbereichs bei ordnungsgemäßer Befestigung, auf der Grundlage eines "erweiterten Frequenzbereichs" oder auf der Grundlage eines "reduzierten Frequenzbereichs".

Mit der Festlegung der Referenz-Frequenzbereiche einher geht dann analog die Festlegung entsprechender Referenz-Amplituden- und Referenz-Dämpfungsbereiche.

"Reduzierte Frequenzbereiche, Amplituden- und Dämpfungsbereiche" können beispielsweise festgelegt werden, indem bestimmte Frequenz-, Amplituden und Dämpfungswerte ausgeschlossen werden, insbesondere die von einem Mittelwert am stärksten abweichenden Werte und/oder Werte innerhalb festgelegter Perzentile. "Reduzierte Frequenz-, Amplituden- und Dämpfungsbereiche" können so beispielweise zwischen dem 0,1 Perzentil und dem 0,9 Perzentil definiert sein, zwischen dem 0,2 Perzentil und dem 0,8 Perzentil oder ähnlich, um eine Verbindung als "i.O." zu bewerten. Je kleiner die Bereiche gewählt werden, desto höher ist die Wahrscheinlichkeit, dass nicht mehr korrekt befestigte Anschlageinrichtungen als "nicht i.O." erkannt werden. Zu kleine Bereiche führen jedoch dazu, dass auch Befestigungen, die noch "i.O." sind vereinzelt (aus Sicherheitsgründen) als "nicht i.O." bewertet werden. Hier muss im Wege einer Auslegung eine pragmatische Lösung gefunden werden. Beispielsweise kann festgelegt werden, dass es zur Erhöhung der Wahrscheinlichkeit, dass Verbindungen, die tatsächlich "nicht i.O." sind auch erkannt werden, akzeptiert wird, wenn bis zu 10 Prozent von mit dem beschriebenen Verfahren überprüften Verbindungen, die "i.O." sind, als "nicht i.O." bewertet werden.

Unabhängig davon, wie eine Referenzeigen- bzw. Referenzresonanzfrequenz oder ein Referenzeigen- bzw. Referenzresonanzfrequenzbereich ermittelt wird, kann sich ein ermittelter oder festgelegter Referenzeigen-bzw. Referenzresonanzfrequenzbereich beispielsweise ausgehend von einem Referenzeigen- bzw. Referenzresonanzfrequenzwert über einen symmetrischen oder asymmetrischen Frequenzbereich erstrecken. So kann beispielsweise ausgehend von einem Mittelwert mit einer Frequenz von 2350 Hz ein Referenzeigenfrequenzbereich von 2350 Hz +/-10Hz (oder andere Werte, wie z.B. +/-50 Hz oder +/-100 Hz) festgelegt sein oder alternativ - unabhängig von einem Mittelwert, z.B. auf Perzentilbasis - ein Referenzeigenfrequenzbereich von einem Minimumwert bis zu einem Maximumwert, z.B. von 2340 Hz bis 2370 Hz. Dementsprechend können sich auch die Resonanzamplitude und ihre korrespondierende Dämpfung oder ein Resonanzamplitudenbereich und die korrespondierenden Dämpfungen ausgehend von Referenzwerten über einen symmetrischen oder asymmetrischen Referenzamplituden- und Referenzdämpfungsbereich erstrecken.

Die Verbindungsqualität kann insbesondere als ausreichend bzw. den Anforderungen genügend und damit als "i.O." bewertet werden, wenn die Abweichung mindestens einer ermittelten Eigen- bzw. Resonanzfrequenz, einer Resonanzamplitude und Dämpfung von der korrespondierenden Referenzeigen- bzw. Referenzresonanzfrequenz, der Referenzamplitude und ihrer Dämpfung einen vorgegebenen Abweichungswert nicht überschreitet, beispielsweise 20% Abweichung, vorzugsweise 15%, 10%, 5%, 4%, 3%, 2%, 1% oder eine geringere Abweichung.

Mit "mindestens" ist in diesem Zusammenhang gemeint, dass auch festgelegt sein kann, dass zwei, drei oder mehr ermittelte Eigen- bzw. Resonanzfrequenzen, Resonanzamplituden und Dämpfungen einen jeweils vorgegebenen Abweichungswert nicht überschreiten.

Falls die Verbindungsqualität als "i.O." angesehen wird, kann die Anschlageinrichtung zur Absicherung einer Person, insbesondere an einem Gebäude, verwendet werden. Wird die Verbindung als "nicht i.O." angesehen, muss die Anschlageinrichtung überprüft und korrigiert oder ersetzt werden. Sie darf aus Arbeitsschutzgründen nur verwendet werden, nachdem sie - beispielsweise nach Korrektur des Anzugsdrehmomentes - getestet und mit Hilfe des beschriebenen Verfahrens als "i.O." befunden wurde.

Zusammenfassend kann festgehalten werden, dass das beschriebene Verfahren eine einfache, sichere und wiederholbare Überprüfung der Verbindung von Anschlageinrichtungen an baulichen Einrichtungen ermöglicht und somit die Arbeitssicherheit, insbesondere für Personen, die sich an einer entsprechenden Anschlageinrichtung sichern wollen, deutlich erhöhen kann.

In einer weiteren praktischen Ausführungsform eines wie vorstehend beschriebenen Verfahrens wird die externe Schwingungsanregung mittels einer Vorrichtung durchgeführt, die zuvor an der Anschlageinrichtung installiert wird. Eine derartige Vorrichtung kann insbesondere fest mit der Anschlageinrichtung verbunden sein. Eine derartige Vorrichtung kann aber auch lediglich in der Nähe der Vorrichtung so positioniert sein, dass sie berührungslos Schwingungen der Anschlageinrichtung anregen kann. In die Vorrichtung, die entweder fest mit der Anschlageinrichtung verbunden ist, oder lediglich in der Nähe der Anschlageinrichtung definiert positioniert ist, kann ein oder können mehrere Sensoren zum Erfassen der Kräfte, die auf die Anschlageinrichtung einwirken, und zum Erfassen der aus den Kräften resultierenden Schwingungen der Anschlageinrichtung integriert sein. Die Schwingungen können direkt oder indirekt erfassen werden.

In einer weiteren praktischen Ausführungsform ist es möglich, in Erweiterung der zuvor beschriebenen Vorrichtung, eine oder mehrere Vorrichtungen jeweils mit einem Sensor oder mehreren Sensoren zum Messen der Schwingungen an der Anschlageinrichtung oder in der Nähe der Anschlageinrichtung anzubringen. Nur beispielhaft wird diesbezüglich auf Vorrichtungen verwiesen, die Schwingungen optisch und/oder magnetisch erfassen.

Unabhängig davon, um welche Art von Vorrichtung (berührungslos oder berührungsbehaftet arbeitend) es sich handelt, kann es sich bei der Vorrichtung um eine in ihrer äußeren Dimension kompakte Vorrichtung handeln. Eine solche Vorrichtung kann weiterhin optional mit einem Energiespeicher ausgestattet, insbesondere batteriebetrieben, sein und somit unabhängig von der Verfügbarkeit eines Stromnetzes sein. Die Durchführung des beschriebenen Verfahrens mit einer derartigen Vorrichtung erlaubt insoweit eine örtlich flexible Durchführung.

Die Herstellung einer festen Verbindung zwischen einer solchen Vorrichtung mit der Anschlageinrichtung ermöglicht eine gute Reproduzierbarkeit. Insbesondere ist es dadurch nach der Befestigung möglich, Schwingungsanregungen ohne Kontakt einer Bedienperson zu der Vorrichtung durchzuführen. Abweichende Messergebnisse, die auf unterschiedliches Verhalten von Bedienpersonen zurückzuführen sind, können somit vermieden werden. Darüber hinaus kann durch die Auswahl eines geeigneten Befestigungsmechanismus eine Kontrollmöglichkeit vorgesehen sein, um die Position der Vorrichtung relativ zu einer Anschlageinrichtung und/oder eine für die Befestigung erzeugte Klemmkraft innerhalb eines schmalen Toleranzbereichs zu halten.

Eine wie vorstehend beschriebene Vorrichtung wird vorzugsweise an einer aus der baulichen Einrichtung herausragenden Hälfte befestigt, insbesondere in einer möglichst weit von der baulichen Einrichtung beabstandeten Position. Denn dort lässt sich die Anregung mit dem geringsten Energieeinsatz erzeugen, und die Amplituden sind - im Vergleich zu näher an der baulichen Einrichtung befindlichen Positionen - groß. Ferner sind derartige Positionen gut zugänglich.

Die Schwingungsanregung der Anschlageinrichtung kann insbesondere über mindestens ein kontinuierliches Frequenzband erfolgen. Das Frequenzband kann sich dabei insbesondere von 0 Hz bis 2 kHz, bevorzugt bis 3 kHz, weiter bevorzugt bis 5 kHz erstrecken. Es kann sich auch bis 10 kHz oder bis zu noch höheren Frequenzen erstrecken, insbesondere bis 20 kHz.

Möglich ist es auch, die Schwingungsanregung(en) auf Frequenzbandabschnitte, insbesondere aus den vorstehend genannten Bereichen, zu beschränken, beispielsweise auf diejenigen Frequenzbandabschnitte, in welchen Referenzeigen- bzw. Referenzresonanzfrequenzen liegen, ggf. erweitert um entsprechende Toleranzbereiche. Beispielsweise können Schwingungsanregungen in den Frequenzbandbereichen von 800 Hz bis 1200 Hz und/oder von 1800 Hz bis 2200 Hz erfolgen, insbesondere wenn Referenzeigen- bzw. Referenzresonanzfrequenzen bei ungefähr 1000 Hz und bei ungefähr 2000 Hz liegen.

Die Anregung über ein Frequenzband oder mehrere Frequenzbandbereiche hat den Vorteil, dass eine Eigen- bzw. Resonanzfrequenz, eine Resonanzamplitude mit korrespondierender Dämpfung oder mehrere Eigen- bzw. Resonanzfrequenzen, die Resonanzamplituden und die korrespondierenden Dämpfungen konkret ermittelt werden können.

Darüber hinaus können so mindestens zwei Eigen- bzw. Resonanzfrequenzen, Resonanzamplituden und die korrespondierenden Dämpfungen, bevorzugt mindestens drei, mindestens vier oder mindestens fünf Eigen- bzw. Resonanzfrequenzen, Resonanzamplituden und die korrespondierenden Dämpfungen ermittelt werden. Eine größere Anzahl von angeregten und gemessenen Eigen- bzw. Resonanzfrequenzen ermöglicht den Abgleich mit mehreren Referenzeigen- bzw. Referenzresonanzfrequenzen, Referenzresonanzamplituden und die korrespondierenden Dämpfungen und damit eine genauere Zuordnung zu einem bestimmten Anschlageinrichtungstyp und Art der Befestigung. Mit zunehmender Anzahl der ermittelten Eigen- bzw. Resonanzfrequenzen, Resonanzamplituden und die korrespondierenden Dämpfungen kann somit die Genauigkeit des Abgleichs verbessert, die Fehlerwahrscheinlichkeit reduziert und somit die Sicherheit eines Messergebnisses erhöht werden.

In einer weiteren praktischen Ausführungsform des Verfahrens erfolgt die externe Schwingungsanregung mittels mindestens eines Aktors und/oder es werden zur Ermittlung der mindestens einen Eigen- bzw. Resonanzfrequenz, der mindestens einen Resonanzamplitude und der korrespondierenden Dämpfung oder mehrerer Eigen- bzw. Resonanzfrequenzen, mehrerer Resonanzamplituden und korrespondierenden Dämpfungen mindestens ein Beschleunigungssensor und/oder mindestens ein Kraftsensor verwendet. Ein für das Verfahren geeigneter Aktor und geeignete Sensoren (Beschleunigungssensor und Kraftsensor) sind als in ihren äußeren Abmessungen relative kleine Standardteile relativ kostengünstig verfügbar, so dass sich eine entsprechende Vorrichtung zur Durchführung des Verfahrens zu vertretbaren Kosten realisieren lässt.

Für das Handling einer entsprechenden Vorrichtung und zum Schutz des Aktors und der Sensoren ist es bevorzugt, wenn alle Elemente in einem - vorzugsweise gemeinsamen - Gehäuse angeordnet sind.

In diesem Zusammenhang wird insbesondere auf die Möglichkeit verwiesen, mindestens einen Aktor zur externen Schwingungsanregung, mindestens einen Kraftsensor und mindestens einen Beschleunigungssensor in einem Gehäuse in Reihen und/oder hintereinander in derselben horizontalen Ebene anzuordnen.

Als Beispiel für einen geeigneten Aktor wird insbesondere auf einen Piezoaktor verwiesen. Bevorzugt wird der Aktor so relativ zu der Anschlageinrichtung angeordnet, dass er in vorgegebenen Anregungsfrequenzen und in einer eindeutig festgelegten Richtung die Anschlageinrichtung in Schwingung versetzt.

Als Beschleunigungssensor ist insbesondere ein Piezosensor, ein Dehnungsmessstreifen oder ein MEMS-Beschleunigungssensor geeignet. Mittels des Kraftsensors und des Beschleunigungssensors kann über eine Fouriertransformation der Übertragungsfrequenzgang und somit mindestens eine Eigen- bzw- Resonanzfrequenz, Resonanzamplitude und korrespondierende Dämpfung der Anschlageinrichtung ermittelt werden.

In einer praktischen Ausführungsform der erfindungsgemäßen Vorrichtung sind mindestens zwei Beschleunigungssensoren in derselben horizontalen Ebene derart angeordnet, dass deren Messrichtung orthogonal zueinander ausgerichtet ist. So kann der Effekt der Richtungsorientierung der Anschlageinrichtung erfasst und bei der Auswertung berücksichtigt werden.

In einer weiteren praktischen Ausführungsform eines wie vorstehend beschriebenen Verfahrens werden zum Ermitteln - gemäß den Verfahrensschritten c) und d) - und/oder zum Vergleichen - gemäß den Verfahrensschritten e) und f) - Daten per Kabel und/oder drahtlos an ein Endgerät und/oder eine zentrale Datenbank übermittelt und dort verarbeitet.

In den Verfahrensschritten c) und d) können von einem Sensor gemessene Messdaten oder Rohdaten an ein Endgerät oder eine zentrale Datenbank übertragen werden. Insbesondere von einem Beschleunigungssensor gemessene Beschleunigungsmesswerte und die mit dem Kraftsensor gemessenen Anregungskräfte können dann auf dem Endgerät oder der Datenbank gespeichert und so verarbeitet werden, dass diese Messdaten über eine Fouriertransformation in ein Frequenzspektrum umgewandelt werden und die entsprechenden Eigen- bzw. Resonanzfrequenzen ermittelt werden. Alternativ können auch die bereits von der Vorrichtung transformierten Daten auf das Endgerät oder eine zentrale Datenbank übertragen werden.

Zum Vergleichen der mindestens einen ermittelten Eigen- bzw. Resonanzfrequenz mit einer korrespondierenden Referenzeigenfrequenz, der Referenzresonanzamplitude und die korrespondierende Dämpfung mit einer korrespondierenden Resonanzamplitude und der korrespondierenden Dämpfung - und bevorzugt mehrerer ermittelter Eigen- bzw. Resonanzfrequenzen mit korrespondierenden Referenzeigen- bzw. Referenzresonanzfrequenzen, mehrerer Resonanzamplituden und der korrespondierenden Dämpfungen - kann die Verarbeitung insbesondere derart erfolgen, dass das ermittelte Frequenzspektrum oder die mindestens eine Eigen- bzw. Resonanzfrequenz, die eine Resonanzamplitude und korrespondierende Dämpfung mit dem auf dem Endgerät oder in der Datenbank hinterlegten Referenzeigen- bzw. Referenzresonanzfrequenz(en), der Resonanzamplitude(en) und der jeweils korrespondierenden Dämpfung oder dem hinterlegten Referenzfrequenzspektrum bzw. Übertragungsfrequenzgang verglichen wird. Bevorzugt ist auf dem Endgerät oder in der Datenbank eine Vielzahl von Übertragungsfrequenzgängen hinterlegt, die die unterschiedlichen Anschlageinrichtungstypen und Arten der Befestigung widerspiegelt. Es wird bei der Verarbeitung ermittelt, ob die mindestens eine gemessene Eigen- bzw. Resonanzfrequenz, die Resonanzamplitude und die korrespondierende Dämpfung mit einer der hinterlegten Referenzfrequenzen, einer Referenzresonanzamplitude und der korrespondierenden Dämpfung oder das ermittelte Frequenzspektrum bzw. der Übertragungsfrequenzgang mit einem korrespondierenden Referenz-Übertragungsfrequenzgang übereinstimmt. Der Abgleich kann dabei entweder durch direktes Vergleichen der ermittelten Datenpunkte mit den Datenpunkten der Referenzdaten erfolgen, oder alternativ kann jeweils eine Differenz berechnet und überprüft werden, ob eine festgelegte Toleranz (oder Toleranzsumme) überschritten wird.

Das Endgerät weist vorzugsweise eine Ausgabeeinrichtung zur Wiedergabe des Ergebnisses der Überprüfung der Verbindungsqualität auf, insbesondere ein Display, einen Lautsprecher oder eine haptische Ausgabeeinheit (Vibrationsalarm oder ähnliches).

Bei unmittelbarer oder mittelbarer Übermittlung der Daten an eine zentrale Datenbank ergibt sich der Vorteil, dass eine zentrale Verwaltung und Anpassung der Daten in der Datenbank ermöglicht wird. Ferner kann auch eine zentrale Kontrolle der Durchführung des Verfahrens durch eine Kontrollinstanz erfolgen, insbesondere durch einen Arbeitgeber, eine Berufsgenossenschaft, einer Berufshaftpflichtversicherung und/oder sonstiger Kontrollinstanzen. Es kann somit auf einfache Art und Weise eine automatisierte Dokumentation von durchgeführten Sicherheitsprüfungen einschließlich der Ergebnisse realisiert werden. Solche Informationen können auch zur Erstellung von Statistiken sehr hilfreich sein, insbesondere für die Hersteller von Anschlageinrichtungen, für Bauherren und Gebäudebesitzer sowie für Arbeitgeber, Berufsgenossenschaften, Berufsverbände und Versicherungen.

Eine ermittelte Eigen- bzw. Resonanzfrequenz, Resonanzamplitude und korrespondierende Dämpfung kann - durch Feststellung, in welchen Referenzfrequenzbereich, Referenzresonanzamplitudenbereich und korrespondierende Dämpfungsbereich diese fällt - auch vorab dazu genutzt werden, durch Vergleichen mit bekannten Eigen- bzw. Resonanzfrequenzen, Resonanzamplituden und korrespondierende Dämpfungen den Anschlageinrichtungstyp und/oder die Art der Befestigung einer Anschlageinrichtung zu ermitteln. Auch für diesen Zweck kann ergänzend eine aus einer bestimmten Anregung resultierende Amplitude der ermittelten Eigenfrequenz berücksichtigt werden. Es hat sich gezeigt, dass bereits eine ermittelte Eigen- bzw. Resonanzfrequenz - ggf. unter zusätzlicher Berücksichtigung der Amplitude - derart charakteristisch für einen bestimmten Anschlageinrichtungstyp und eine bestimmte Art der Befestigung ist, dass nur aufgrund einer solchen gemessenen Eigen- bzw. Resonanzfrequenz und eines Vergleichs mit einer Referenzeigen- bzw. Referenzresonanzfrequenz der Anschlageinrichtungstyp und die Art der Befestigung ermittelt werden kann. Auch aus einer Vielzahl von Typen und Befestigungsarten kann so der installierte Anschlageinrichtungstyp und die korrekte Befestigungsart herausgefiltert werden. Informationen über den Anschlageinrichtungstyp und die Art der Befestigung können insbesondere zur Erstellung eines Prüfprotokolls verwendet werden.

Alternativ oder in Ergänzung kann vor der Durchführung einer Messung an einer Vorrichtung und/oder an einem mit der Vorrichtung gekoppelten Endgerät der Anschlageinrichtungstyp und die Art der Befestigung der Anschlageinrichtung ausgewählt oder eingegeben werden. Wenn diese Information an einem Endgerät eingegeben oder ausgewählt wird, muss die Information anschließend an die Vorrichtung übertragen oder bei einer späteren Übertragung von Steuerbefehlen an die Vorrichtung berücksichtigt werden. Eine ermittelte Eigen- bzw.- Resonanzfrequenz, Resonanzamplitude und korrespondierende Dämpfung kann dann im nächsten Schritt gemäß dem beschriebenen Verfahren sofort mit der Referenzeigenfrequenz bzw. Referenzresonanzfrequenz, der Referenzresonanzamplitude und der korrespondierenden Dämpfung abgeglichen werden.

Die Erfindung betrifft auch eine Vorrichtung zur Bewertung der Verbindungsqualität zwischen einer mit einem Ende an einer baulichen Einrichtung - insbesondere an einem Gebäude - befestigten Anschlageinrichtung und der baulichen Einrichtung, insbesondere zur Durchführung eines wie vorstehend beschriebenen Verfahrens. Eine solche Vorrichtung weist mindestens einen Aktor zur externen Schwingungsanregung der Anschlageinrichtung sowie mindestens einen Beschleunigungssensor zum Messen der aus der externen Schwingungsanregung zur Anschlageinrichtung resultierenden Schwingungen und einen Kraftsensor zur Messung der in die Anschlageinrichtung eingeleiteten bzw. eingebrachten Kräfte und somit zur Ermittlung mindestens einer Eigen- bzw. Resonanzfrequenz, einer Resonanzamplitude und der korrespondierenden Dämpfung der Anschlageinrichtung auf bzw. des Übertragungsfrequenzgangs der Anschlageinrichtung, wobei der mindestens eine Aktor, der mindestens eine Kraftsensor und der mindestens eine Beschleunigungssensor in einem Gehäuse angeordnet sind.

Der Aktor kann dazu ausgebildet sein, die Anschlageinrichtung berührungslos und/oder berührungsbehaftet zum Schwingen anzuregen.

Die Sensoren können dazu ausgebildet sein, zur Ermittlung von Schwingungen, insbesondere des Übertragungsfrequenzgangs, geeignete Größen berührungslos und/oder berührungsbehaftet zu erfassen.

Berührungslos bzw. berührungsbehaftet bezieht sich vorstehend insbesondere darauf, ob ein direkter Kontakt zwischen dem jeweiligen Element (Sensor/Aktor) zu der Anschlageinrichtung vorhanden sein muss, oder ob das Element auch beabstandet zu der Anschlageinrichtung und somit berührungslos angeordnet sein kann. Berührungslos umfasst dabei auch Installationen, bei denen kein Festkörperkontakt zu der Anschlageinrichtung besteht, z.B. eine durch Atmosphärenluft beabstandete Anordnung zwischen Sensor/Aktor und der Anschlageinrichtung. Nur beispielhaft wird diesbezüglich auf die Möglichkeit verwiesen, eine Anschlageinrichtung akustisch zum Schwingen anzuregen sowie auf die Möglichkeit, die Schwingungen (insbesondere des Übertragungsfrequenzgangs) einer Anschlageinrichtung optisch und/oder magnetisch zu ermitteln.

Die Vorrichtung kann optional auch mindestens eine Befestigungsvorrichtung zur Befestigung der Vorrichtung an der Anschlageinrichtung aufweisen.

Alternativ oder in Ergänzung kann sie auch einen Standfuß oder ein Stativ umfassen, um relativ zu einer Anschlageinrichtung positioniert werden zu können. Dies ist insbesondere dann hilfreich, wenn die Vorrichtung und die Anschlageinrichtung berührungslos zusammenwirken.

Als Befestigungsvorrichtung ist insbesondere eine Schnellkupplungsvorrichtung geeignet, insbesondere in Form eines Schnellspanners, eines Spannbandes und/oder einer federbetätigten und/oder verschraubbaren Klemme. Die Befestigungsvorrichtung ist dazu vorgesehen, die Vorrichtung schnell, sicher und in wiederholbarer Art und Weise an einer Anschlageinrichtung zu befestigen. Besonders vorteilhaft ist es in diesem Zusammenhang, wenn Mittel vorgesehen sind, um eine gleichbleibende Qualität der Verbindung sicherzustellen, insbesondere eine stets innerhalb eines schmalen Toleranzbereichs liegende Spannkraft, sofern die Befestigung mittels eines Spannelements erfolgt.

Die Vorrichtung ist vorzugsweise in ihren äußeren Abmaßen kompakt gestaltet, so dass sie sich leicht transportieren und flexibel einsetzen lässt. Ein Gewicht der Vorrichtung von weniger als 1000 g, vorzugsweise weniger als 500 g oder sogar weniger als 300 g ist bevorzugt. Die Größe ist vorzugsweise kleiner als 20 cm x 20 cm x 20 cm, weiter bevorzugt kleiner als 10 cm x 10 cm x 10 cm und besonders bevorzugt kleiner als 9 cm x 6 cm x 3 cm. Wie bereits erwähnt, ist es weiter bevorzugt, wenn die Vorrichtung - zumindest optional - mit einem Energiespeicher versehen ist und betrieben werden kann, insbesondere mit einem wiederaufladbaren Energiespeicher, beispielsweise mit einer Batterie.

In einer weiteren praktischen Ausführungsform einer erfindungsgemäßen Vorrichtung weist die Vorrichtung selbst und/oder ein mit der Vorrichtung kommunizierendes Endgerät und/oder einen Datenspeicher mit mindestens einem gespeicherten Referenzübertragungsfrequenzgang mit entsprechenden Referenzeigen- bzw. -resonanzfrequenz auf. In dem Datenspeicher sind vorzugsweise eine Vielzahl von Referenzeigen- bzw. -resonanzfrequenzen, Referenzresonanzamplituden und korrespondierende Dämpfungen oder gesamte Referenzfrequenzspektren gespeichert, die für verschiedene Typen von Anschlageinrichtungen und verschiedene Arten der Befestigung ermittelt wurden und zum Vergleich mit gemessenen Referenzeigen- bzw. -resonanzfrequenzen, Referenzresonanzamplituden und korrespondierende Dämpfungen dienen.

Die Speicherung in einem zentralen Datenspeicher, insbesondere in einer Datenbank, die über das Internet verfügbar ist, hat den Vorteil, dass Referenzübertragungsfrequenzgänge, Referenzeigen- bzw. -resonanzfrequenzen, Referenzresonanzamplituden und korrespondierende Dämpfungen von einer zentralen Stelle ermittelt und bereitgestellt werden können. Dadurch kann eine Aktualisierung und Ergänzung von Daten kurzfristig erfolgen, und bei der Verwendung einer erfindungsgemäßen Vorrichtung kann - insbesondere durch einen erforderlichen unmittelbaren Zugriff oder eine Überprüfung der Aktualität der Daten - sichergestellt werden, dass nicht versehentlich veraltete Referenzdaten verwendet werden. Die Sicherheit kann so weiter erhöht werden.

In Ergänzung dazu oder alternativ weist die Vorrichtung und/oder ein mit der Vorrichtung kommunizierendes Endgerät und/oder eine Datenbank in einer weiteren praktischen Ausführungsform eine Schnittstelle zur drahtlosen Übertragung auf, insbesondere um Daten zu einem Datenspeicher mit gespeicherten Referenzübertragungsfrequenzgängen oder damit korrespondierenden Daten zu übertragen. Insbesondere können dabei mittels der drahtlosen Verbindung die gemessenen Werte, wie z.B. eine Kraft und/oder eine Beschleunigung auch an schwer zugänglichen Stellen einfach übermittelt werden.

Wie bereits erwähnt, sind der Aktor und/oder der mindestens eine Sensor insbesondere - zumindest teilweise - geschützt in einem Gehäuse ange-ordnet, wobei in dem Gehäuse ebenfalls die erforderliche Elektronik (Hard- und Software) sowie ein Energiespeicher zur Energieversorgung des Aktors und/oder des mindestens einen Sensors angeordnet ist.

In einer weiteren Ausführungsform können der Aktor und/oder der mindestens eine Sensor in einer geeigneten Vorrichtung angeordnet sein, getrennt von der in einem Gehäuse angeordneten erforderliche Elektronik (Hard- und Software) sowie des Energiespeichers zur Energieversorgung des Aktors und/oder des mindestens einen Sensors.

In einer weiteren praktischen Ausführungsform ist eine Befestigungsvorrichtung vorgesehen, um die Vorrichtung - insbesondere in einer kompakten, von einem einheitlichen Gehäuse umschlossenen Bauform - fest mit der Anschlageinrichtung verbinden zu können.

Der mindestens eine Sensor ist vorzugsweise zur Ermittlung von Biegeschwingungen geeignet und ausgelegt, um anhand der aufgezeichneten und analysierten Biegeschwingungen die untersuchte Verbindungsqualität zu bewerten. Vorteilhaft dabei ist es insbesondere, wenn die Vorrichtung unmittelbar und fest mit der Anschlageinrichtung verbunden ist, so dass diese mit der Anschlageinrichtung mitschwingt.

Der mindestens eine Aktor ist in einer besonders praktischen Ausführungsform so ausgebildet und angeordnet, dass er mit der Anschlageinrichtung verbindbar ist und diese berührungsbehaftet in Schwingung versetzen kann. Dies hat den Vorteil, dass die für die Nutzung der Vorrichtung erforderliche Schwingungsanregung materialunabhängig erfolgen kann, insbesondere unabhängig davon, ob die Anschlageinrichtung aus einem ferromagnetischen Material hergestellt ist.

Der mindestens eine Aktor ist dabei in einer einfachen und zugleich effizienten Ausführungsform dazu ausgebildet, eine zu überprüfende Anschlageinrichtung durch eine steuerbare, translatorische Bewegung in Schwingung zu versetzen. Die Steuerbarkeit in Kombination mit der translatorischen Bewegung hat den Vorteil, dass die Anregungskraft und somit der Betrag der Amplitude der Schwingung stufenlos und unabhängig von anderen Parametern einstellbar ist.

Bei der Vorrichtung sind mindestens ein Kraftsensor und mindestens ein Beschleunigungssensor gemeinsam mit mindestens einem Aktor in einem gemeinsamen Gehäuse angeordnet, so dass die Vorrichtung selbst ein kompaktes, starres und einfach zu bedienendes "Messinstrument" darstellt.

In einer weiteren praktischen Ausführungsform weist die Vorrichtung eine Kamera und/oder eine Ortungsfunktion auf. Mittels einer Kamera kann beispielsweise eine korrekte Befestigung der Vorrichtung an der Anschlageinrichtung überprüft und/oder eine Messung an einem bestimmten Ort mit Bildern und Uhrzeit dokumentiert werden. Ebenfalls möglich ist es, mit Hilfe einer Kamera im Wege einer "augmented reality" einer Person, die eine Überprüfung durchführen möchte, entsprechende Hilfe zur Verfügung zu stellen. Beispielsweise kann der Typ einer zu überprüfenden Anschlageinrichtung ermittelt und vorausgewählt oder vorgeschlagen werden.

Mittels einer Ortungsfunktion, insbesondere eines GPS, kann der Ort der überprüften Anschlageinrichtung ermittelt werden und insbesondere in Zusammenhang mit einem Messprotokoll mit Datum und Uhrzeit dokumentiert werden.

Weitere praktische Ausführungsformen und Vorteile der Erfindung sind nachfolgend im Zusammenhang mit den Zeichnungen beschrieben. Es zeigen:
- Fig. 1: eine Anordnung einer erfindungsgemäßen Vorrichtung an einer Anschlageinrichtung, die an einer nur exemplarisch dargestellten baulichen Einrichtung befestigt ist,
- Fig. 2: die in Fig. 1 gezeigte Anordnung in einer Schnittdarstellung gemäß Linie II-II,
- Fig. 3: eine Detailansicht des in Fig. 1 mit III gekennzeichneten Bereichs in einer perspektivischen Ansicht, in welcher die erfindungsgemäße Vorrichtung im Längsschnitt dargestellt ist,
- Fig. 4: ein Ablaufdiagramm eines Verfahrens,
- Fig. 5: eine schematische Darstellung einer Messung.
- Fig. 6: eine Anordnung einer weiteren Ausführungsform der erfindungsgemäßen Vorrichtung an einer Anschlageinrichtung, die an einer nur exemplarisch dargestellten baulichen Einrichtung befestigt ist,
- Fig. 7: die in Fig. 6 gezeigte Anordnung in einer Schnittdarstellung analog zu der Linie II-II entsprechend Fig. 1,
- Fig. 8: eine Anordnung der erfindungsgemäßen Vorrichtung aus den Fig. 6 und 7 an einer Anschlageinrichtung in Form einer Gerüstverankerung, die an einer baulichen Einrichtung befestigt ist, und
- Fig. 9: die in Fig. 8 gezeigte Anordnung in einer Schnittdarstellung analog zu der Linie II-II entsprechend Fig. 1.

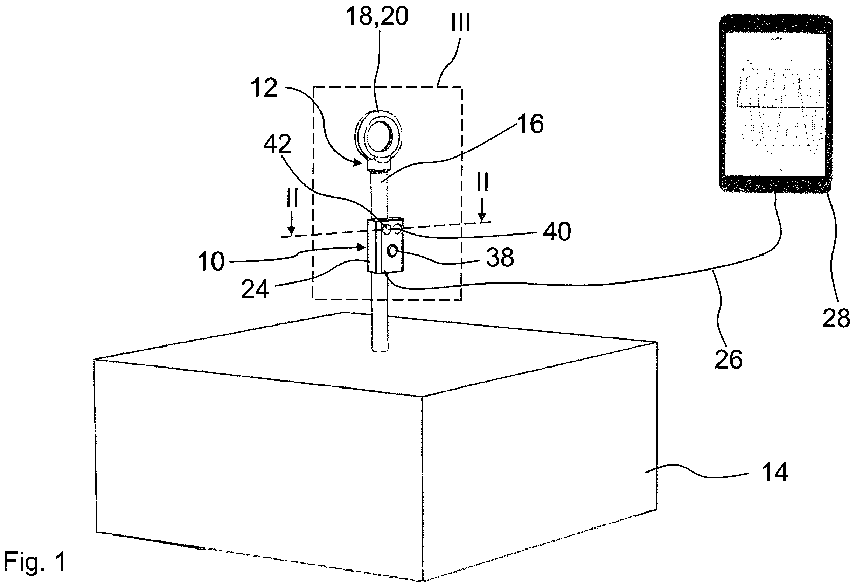

In Fig. 1 ist eine Anordnung einer Vorrichtung 10 zur Überprüfung der Verbindungsqualität einer Anschlageinrichtung 12 an einer baulichen Einrichtung 14 dargestellt, wobei die Vorrichtung 10 mit der Anschlageinrichtung 12 verbunden ist. Vorliegend ist als bauliche Einrichtung 14, insbesondere eines Gebäudes oder eines Daches, lediglich exemplarisch ein quaderförmiges Element dargestellt. Die Anschlageinrichtung 12 ist an einem Ende (nicht sichtbar, da innerhalb der baulichen Einrichtung 14 angeordnet) mit der baulichen Einrichtung 14 verbunden, in diesem Ausführungsbeispiel mittels einer Verschraubung. Die Anschlageinrichtung 12 ist in dem Ausführungsbeispiel stabartig ausgebildet. Sie weist einen unteren, zylinderförmigen Abschnitt 16 auf, der sich von dem nicht sichtbaren, unteren Ende ausgehend aus der baulichen Einrichtung 14 herausragend nahezu bis zum oberen Ende erstreckt. Im Bereich des von der baulichen Einrichtung 14 beabstandeten Endes ist eine Öse 18 vorgesehen, welche als Anschlagpunkt 20 dient. An der Öse 18 können Seile oder andere Sicherungsmittel (nicht dargestellt) zur Absicherung einer Person befestigt werden. Die in Fig. 1 sichtbare Länge der Anschlageinrichtung 12, über welche diese aus der baulichen Einrichtung 14 herausragt, beträgt üblicherweise maximal 2 m, in den meisten Fällen maximal 1 m, maximal 80 cm oder sogar maximal 60 cm.

Zur Überprüfung der Verbindungsqualität der Anschlageinrichtung 12 mit der baulichen Einrichtung 14 ist die Vorrichtung 10 an dem stabartigen Abschnitt 16 der Anschlageinrichtung 12 befestigt. Die Vorrichtung 10 ist vorliegend etwa mittig des aus der baulichen Einrichtung 14 herausragenden stabartigen Abschnitts 16 angeordnet.

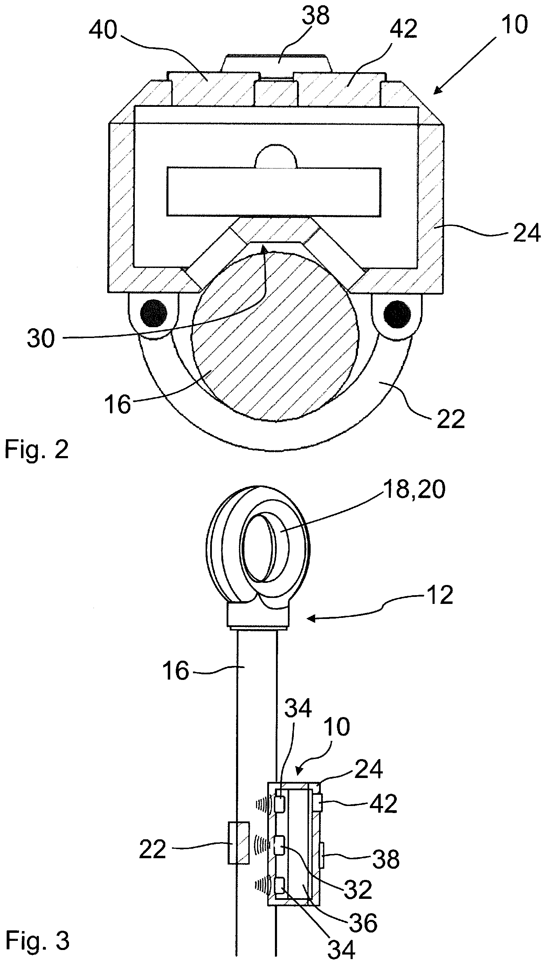

Die Vorrichtung 10 umfasst eine Befestigungsvorrichtung 22 in Form eines Schnellspanners (siehe Fig. 2), dessen Funktionsweise nicht im Detail dargestellt ist, und ein Gehäuse 24.

In der gezeigten Ausführungsform ist die Vorrichtung 10 über ein Kabel 26 mit einem Endgerät 28 verbunden. Das Kabel 26 ist allerdings insoweit symbolisch zu sehen, als alternativ die Verbindung zwischen der Vorrichtung 10 und dem Endgerät 28 auch drahtlos erfolgen kann. Auf dem Endgerät 28 können die ermittelten Messwerte und insbesondere das Ergebnis der Überprüfung der Verbindungsqualität angezeigt werden.

In Fig. 2 ist ein Querschnitt durch die Vorrichtung 10 gemäß der Linie II-II in Fig. 1 dargestellt. Wie gut zu erkennen ist, umschließt die Vorrichtung 10 mit dem Gehäuse 24 und der Befestigungsvorrichtung 22 die Anschlageinrichtung 12 vollständig, d.h. sie erstreckt sich über den gesamten Umfang der Anschlageinrichtung 12. Das Gehäuse 24 weist dazu eine c-förmige Vertiefung auf und ist damit an die bogenförmige Kontur der Anschlageinrichtung 12 angepasst.

Fig. 3 zeigt die Vorrichtung 10 in einem Längsschnitt. In dem Gehäuse 24 ist ein schematisch dargestellter Aktor 32 zur Schwingungsanregung der Anschlageinrichtung 12 angeordnet. Der Aktor 32 ist in Hochrichtung betrachtet (entspricht der axialen Richtung der Anschlageinrichtung 12) mittig des Gehäuses 24 und an einer zu der Anschlageinrichtung 12, d.h. nach innen gerichteten Seite des Gehäuses 24 angeordnet. Oberhalb und unterhalb des Aktors 32 ist jeweils ein Sensor 34 angeordnet. Bei den Sensoren 34 handelt es sich vorliegend um einen Beschleunigungssensor und einen Kraftsensor, welche ebenfalls jeweils an der zur Anschlageinrichtung 12 gerichteten Seite des Gehäuses 24 angeordnet sind. Zusätzlich sind in dem Gehäuse ein Mikrocontroller 36 und ein nicht dargestellter Energiespeicher angeordnet.

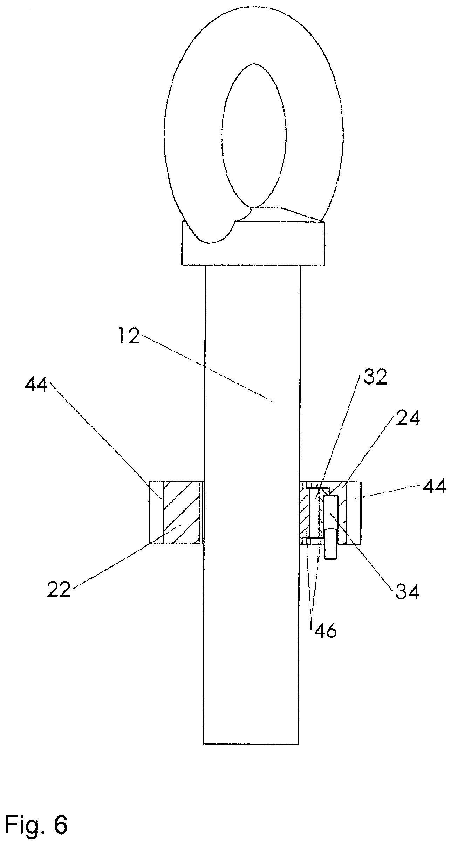

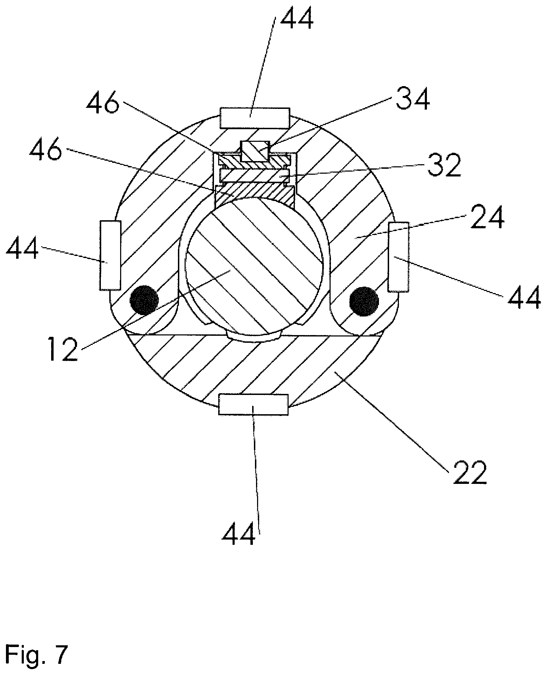

In Fig. 7 ist der Querschnitt durch eine weitere Ausführungsform einer Vorrichtung 10 analog zu der Linie II-II in Fig. 1 dargestellt. In Fig. 6 ist diese Vorrichtung 10 in einem Längsschnitt dargestellt. Wie in Fig. 7 gut zu erkennen ist, umschließt die Vorrichtung 10 mit dem Gehäuse 24 und der Befestigungsvorrichtung 22 die Anschlageinrichtung 12 vollständig, d.h. sie erstreckt sich über den gesamten Umfang der Anschlageinrichtung 12 und ist an die Kontur der Anschlageinrichtung 12 angepasst. Das Gehäuse 24 weist dazu eine Aussparung auf, in der der schematisch dargestellte Aktor 32 zur Schwingungsanregung der Anschlageinrichtung 12 angeordnet ist. Die Kräfte werden über ein geeignetes Übertragungselement 46 auf die Anschlageinrichtung 12 übertragen. Der schematisch dargestellte Sensor 34 dient zur Messung der in die Anschlageinrichtung eingeleiteten Kräfte.

An dem Gehäuse 24 und/oder der Befestigungsvorrichtung 22 ist, in einer horizontalen Ebene mit dem Aktor 32, aber mit verschiedenen Orientierungen der Messrichtung jeweils ein Sensor 44 angeordnet. Bei den Sensoren 44 handelt es sich vorliegend jeweils um einen Beschleunigungssensor, welche ebenfalls jeweils an der zur Anschlageinrichtung 12 gerichteten Seite des Gehäuses 24 oder der Befestigungsvorrichtung 22 angeordnet sind. In der praktischen Ausführung muss jeweils mindestens einer der Sensoren 44 verwendet werden. Zusätzlich können in einer Ausführung in dem Gehäuse 24 ein nicht dargestellter Mikrocontroller und ein nicht dargestellter Energiespeicher angeordnet sein.

An der Außenseite des Gehäuses 24 sind zudem drei Bedientasten 38, 40, 42 angeordnet (nur in den Fig. 1-3 dargestellt). Die Bedientasten 38, 40, 42 erlauben beispielsweise ein Ein- und Ausschalten der Vorrichtung 10 sowie ein Starten und Beenden der Überprüfung der Verbindungsqualität an der Vorrichtung 10 selbst.

Die Bedientasten 38, 40, 42 können aber auch auf einem Smart Device und mittels Touchscreen realisiert sein, so dass der Prüfablauf, ein Ein- und Ausschalten der Vorrichtung 10 sowie ein Starten und Beenden der Überprüfung der Verbindungsqualität über eine kabelgebundene Verbindung 26 oder eine drahtlose Datenverbindung möglich ist.

Fig. 6 zeigt die weitere Ausführungsform der Vorrichtung 10 in einem Längsschnitt. In dem Gehäuse 24 ist ein schematisch dargestellter Aktor 32 zur Schwingungsanregung der Anschlageinrichtung 12 angeordnet. Der Aktor 32 ist in Hochrichtung betrachtet (entspricht der axialen Richtung der Anschlageinrichtung 12) mittig des Gehäuses 24 und an einer zu der Anschlageinrichtung 12, d.h. nach innen gerichteten Seite des Gehäuses 24 angeordnet. In einer horizontalen Ebene mit dem Aktor 32 ist jeweils ein Sensor 34 und mindestens ein Sensor 44 angeordnet. Bei dem Sensor 34 handelt es sich vorliegend um einen Kraftsensor, bei den Sensoren 44 handelt es sich vorliegend um einen Beschleunigungssensor, welche ebenfalls jeweils an der zur Anschlageinrichtung 12 gerichteten Seite des Gehäuses 24 angeordnet sind. Zusätzlich ist in dem Gehäuse ein Mikrocontroller 36 und ein nicht dargestellter Energiespeicher angeordnet.

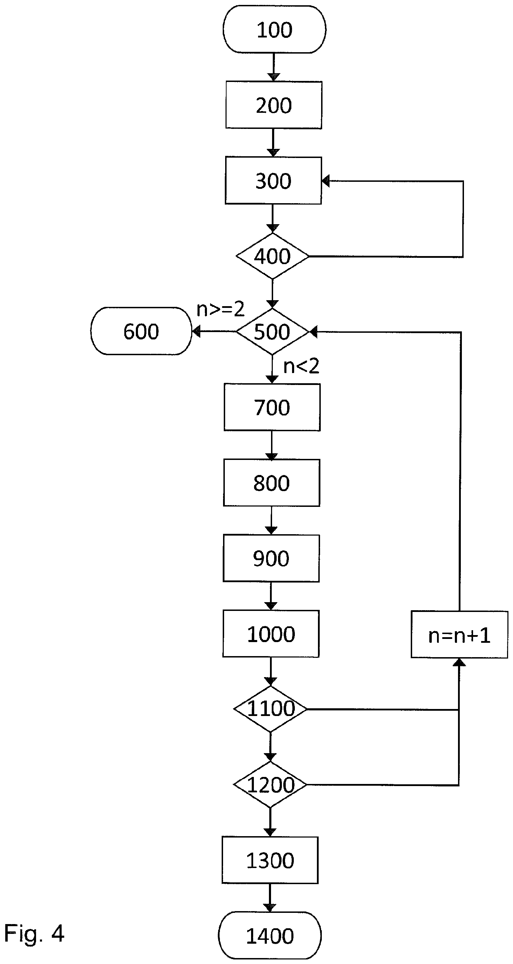

In Verbindung mit Fig. 4 wird im Folgenden ein Verfahren zur Überprüfung der Verbindungsqualität der Anschlageinrichtung 12 an der baulichen Einrichtung 14 erläutert.

Mit dem Feld 100 ist der Beginn des Verfahrens gekennzeichnet. Die jeweils unmittelbar folgenden Prozessschritte sind durch Verbindungspfeile gekennzeichnet. Das Verfahren ist beendet, wenn das Feld 600 erreicht ist oder wenn das Feld 1400 erreicht ist.

Zunächst werden die Vorrichtung 10 und das Endgerät 28 eingeschaltet.

In Schritt 200 wird eine Verbindung zwischen der Vorrichtung 10 und dem Endgerät 28 hergestellt, wie vorstehend beschrieben entweder mittels Kabel 26 und/oder drahtlos. Unabhängig von der Art der Übertragung kann mit dem Endgerät 28 und/oder mit der Vorrichtung 10 optional eine Verbindung zu einer Datenbank hergestellt werden. Eine solche Datenbank kann insbesondere eine cloudbasierte Datenbank sein, die über einen Internetzugang verfügbar ist.

Dann wird die Vorrichtung 10 in Schritt 300 an der Anschlageinrichtung 12 befestigt, wie in Fig. 1 bis 3 dargestellt.

In Schritt 400 wird mittels des Kraftsensors 34 die Vorspannkraft ermittelt, mit welcher die Vorrichtung 10 an der Anschlageinrichtung 12 befestigt ist. Ist die Vorspannkraft kleiner als eine vorgegebene Mindestvorspannkraft, so wird dies ausgegeben. Optional kann auch eine Maximalvorspannkraft vorgegeben sein und überprüft werden. Die Schritte 300 und 400 werden so lange wiederholt, bis in Ereignis 400 festgestellt wird, dass die Vorspannkraft innerhalb eines Soll-Wertebereichs liegt.

Optional kann, wie in Fig. 4 dargestellt, ein Schleifenzähler vorgesehen sein, mittels welchem gemäß Ereignis 500 die Anzahl n der Durchführung der Verfahrensschritte 300 und 400 erfasst wird. Mit Hilfe des Schleifenzählers wird bei Erreichen einer in dem Ereignis 500 festgelegten Maximalzahl, hier n >=2, gemäß 600 die Überprüfung abgebrochen.

Wird festgestellt, dass die Vorspannkraft größer ist als eine vorgegebene Mindestvorspannkraft bzw. dass diese in einem Soll-Wertebereich liegt, und liegt die Anzahl n an durchlaufenden Schleifen unter der optional festgelegten maximalen Maximalanzahl (hier: 2), wird das Verfahren gemäß Schritt 700 fortgesetzt.

In Schritt 700 erfolgt eine Schwingungsanregung der Anschlageinrichtung 12 mittels des Aktors 32. Dabei wird die Anschlageinrichtung 12 mit mehreren Frequenzen über ein festgelegtes Frequenzband angeregt, hier über ein Frequenzband von 0 Hz bis 10000 Hz.

Der mindestens eine Sensor 34 bzw. 44 erfasst gemäß Schritt 800 die Beschleunigungswerte, mit denen die Anschlageinrichtung 12 infolge der Kraftanregung durch den Aktor 32 schwingt, mit dem Sensor 34 wird die Kraft gemessen, die der Aktor 32 auf die Anschlageinrichtung 12 ausübt.

Die gemessenen Beschleunigungs- und Kraftwerte werden per Kabel 26 oder drahtlos zu dem Endgerät 28 übertragen (Schritt 900). Die Beschleunigungs- und Kraftwerte können alternativ ebenfalls an eine Datenbank übertragen werden und anschließend - verarbeitet oder unverarbeitet - über die Datenbank zu dem Endgerät 28 übertragen werden.

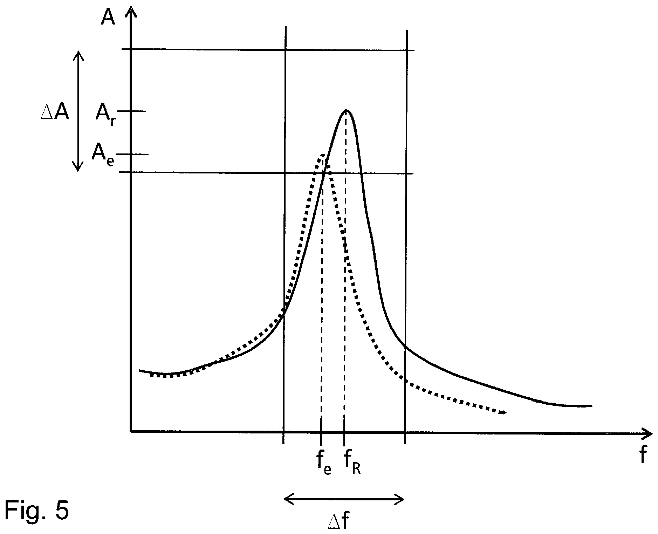

Mittels der Fouriertransformation wird über die Datenbank und/oder das Endgerät 28 aus den gemessenen zeitabhängigen Beschleunigungs- und Kraftwerten in Schritt 1000 der Übertragungsfrequenzgang berechnet (vgl. Fig. 5).

In der gezeigten Ausführungsform sind auf dem Endgerät 28 eine Vielzahl von Referenzfrequenzspektren bzw. Referenzübertragungsfrequenzen, die entsprechenden Referenzeigen- bzw. Referenzresonanzfrequenzen, Referenzresonanzamplituden und korrespondierende Dämpfungen gespeichert, welche jeweils einen bestimmten Anschlageinrichtungstyp und eine bestimmte Art der Befestigung repräsentieren. Zur Überprüfung der Verbindungsqualität der Anschlageinrichtung 12 an der baulichen Einrichtung 14 wird nun in einem Ereignis 1100 festgestellt, ob aus einem Vergleich der ermittelten Eigen- bzw. Resonanzfrequenzen, Resonanzamplituden und korrespondierenden Dämpfungen mit der Vielzahl von korrespondierenden Referenzeigen- bzw. Referenzresonanzfrequenzen, Referenzresonanzamplituden und korrespondierenden Dämpfungen ein bestimmter Anschlageinrichtungstyp - und optional, insbesondere wenn es mehrere Möglichkeiten zur Befestigung dieses Anschlageinrichtungstyps gibt, auch die Art der Befestigung - erkannt werden kann (Typerkennung).

Ist dies nicht möglich, wird das Verfahren ab Schritt 500 wiederholt. Ebenfalls wird das Durchlaufen dieser Schleife in Schritt 500 gezählt. Mit jedem Durchlaufen der Schleife wird die Zahl n um 1 erhöht. Erreicht die Zahl n eine Maximalanzahl, hier n>=2, wird das Verfahren gemäß 600 abgebrochen.

Kann gemäß Ereignis 1100 der Anschlageinrichtungstyp - und, sofern relevant, die Art der Befestigung - zugeordnet werden, so wird in Ereignis 1200 ein Detailvergleich zwischen dem ermittelten Frequenzspektrum und dem Referenzspektrum vorgenommen.

Falls die Abweichung der Eigen- bzw. Resonanzfrequenz(en) von der korrespondierenden hinterlegten Referenzeigen- bzw. Referenzresonanzfrequenz(en) größer als ein vorgegebener Abweichungswert Δf ist und/oder falls die Abweichung der Resonanzamplitude(n) der Eigenfrequenz(en) von einer Resonanzamplitude(n) und korrespondierenden Dämpfung(en) größer als ein vorgegebener Abweichungswert ΔA ist, so wird die Anschlageinrichtung 12 als "nicht i.O." identifiziert. Das Verfahren wird dann ab Schritt 500 wiederholt, wobei die Anzahl der durchlaufenden Schleifen n um 1 erhöht wird. Ist die Maximalanzahl der maximalen Schleifen erreicht (hier: 2), wird die Überprüfung gemäß 600 abgebrochen und die Verbindung als "nicht i.O." gewertet.

Ist die Abweichung der Eigen- bzw. Resonanzfrequenz(en) in Bezug auf die Referenzfrequenz(en) kleiner als ein vorgegebenes Δf und ist auch die Abweichung der Resonanzamplitude(n) von den Referenzamplitude(n) kleiner als ein vorgegebenes ΔA, so wird die Verbindung zwischen der Anschlageinrichtung 12 und der baulichen Einrichtung 14 als "i.O" gewertet.

In Schritt 1300 erfolgt die Speicherung aller relevanten Daten. Gemäß 1400 ist die Überprüfung der Verbindung der Anschlageinrichtung 12 mit der baulichen Einrichtung 14 als i.O." beendet.

In Fig. 5 ist schematisch ein ermitteltes Frequenzspektrum einer Anschlageinrichtung 12 dargestellt (gestrichelte Linie). Auf der x-Achse ist die Frequenz aufgetragen und auf der y-Achse die Amplitude. Vorliegend ist nur ein Ausschnitt gezeigt, der eine Eigenfrequenz f_{E} enthält, hier die Eigenfrequenz erster Ordnung. Zusätzlich ist ein korrespondierendes Referenzfrequenzspektrum mit einer Referenzeigenfrequenz f_{R} dargestellt (durchgezogene Linie), welches für diesen Anschlageinrichtungstyp und Art der Befestigung ermittelt wurde. Wie zu erkennen ist, liegt die Eigenfrequenz f_{E} innerhalb eines durch das Abweichungsintervall Δf angegebenen Bereichs. Es handelt sich damit um eine zulässige Abweichung von der Referenzeigenfrequenz fR.

Die Amplitude A_{E} liegt ebenfalls innerhalb eines vorgegebenen Abweichungsintervalls ΔA von der Referenzamplitude A_{R}. Auch die Abweichung der Amplitude A_{E} ist damit zulässig. Der sich durch die Abweichungsbereiche Δf und ΔA ergebende Bereich in dem Diagramm aus Fig. 5 kann somit als Zielbereich angesehen werden, innerhalb dessen eine Eigenfrequenz fₑ mit der Amplitude A_{E} als zulässig angesehen und die Verbindung damit als "i.O" angesehen wird. In diesem Beispiel ist die Verbindung der überprüften Anschlageinrichtung 12 damit "i.O".

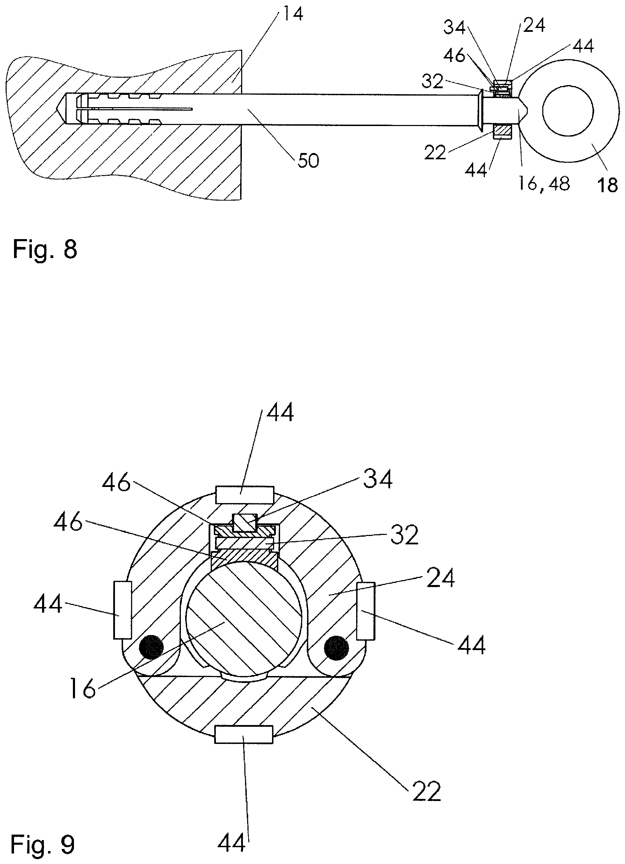

Die Figuren 8 und 9 zeigen einen weiteren Anwendungsfall, bei dem eine erfindungsgemäße Vorrichtung 10, die identisch ist mit der in den Figuren 6 und 7 gezeigten Vorrichtung 10, an einer Anschlageinrichtung in Form einer Gerüstverankerung 48 befestigt ist. Bei der Gerüstverankerung 48 handelt es sich um einen Schraubschaft (in Fig. 8 nicht erkennbar), der über einen stabartigen Abschnitt 16 zu einer endseitigen Öse 18 führt. In der gezeigten Anordnung ist die Gerüstverankerung 48 mit ihrem Schraubschaft und einem Dübel 50 in eine bauliche Einrichtung 14 eingeschraubt. Hinsichtlich der einzelnen Elemente der Vorrichtung 10 sowie der Befestigung der Vorrichtung an der Gerüstverankerung 48 wird auf die vorstehende Beschreibung verwiesen, insbesondere auf die Beschreibung in Verbindung mit den Figuren 6 und 7.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Vorrichtung
- 12: Anschlageinrichtung
- 14: bauliche Einrichtung
- 16: stabartiger Abschnitt
- 18: Öse
- 20: Anschlagpunkt
- 22: Befestigungsvorrichtung
- 24: Gehäuse
- 26: Kabel
- 28: Endgerät
- 30: Vertiefung
- 32: Aktor
- 34: Sensor
- 36: Mikrocontroller
- 38: Bedientaste
- 40: Bedientaste
- 42: Bedientaste
- 44: Beschleunigungssensor
- 46: Übertragungselement
- 48: Gerüstverankerung
- 50: Dübel

## Patentansprüche

1. Verfahren zur Bewertung der Verbindungsqualität zwischen einer mit einem Ende an einer baulichen Einrichtung (14) befestigten Anschlageinrichtung (12) und der baulichen Einrichtung (14) umfassend folgende Verfahrensschritte:
a) externe Schwingungsanregung der Anschlageinrichtung (12) in einem an der baulichen Einrichtung (14) angebautem Zustand mit verschiedenen Anregungsfrequenzen,
b) Messen der in die Anschlageinrichtung (12) eingebrachten Kräfte und der daraus resultierenden Schwingungen und Berechnen des Übertragungsfrequenzgangs der Anschlageinrichtung (12),
c) Ermitteln mindestens einer Eigen- bzw. Resonanzfrequenz der Anschlageinrichtung (12) anhand des Übertragungsfrequenzganges,
d) Ermitteln der Resonanzamplitude des Übertragungsfrequenzgangs und der korrespondierenden Dämpfung der zuvor ermittelten mindestens einen Eigen- bzw. Resonanzfrequenz der Anschlageinrichtung (12),
e) Vergleichen der mindestens einen ermittelten Eigen- oder Resonanzfrequenz mit mindestens einer Referenzeigen- bzw. Resonanzfrequenz der Anschlageinrichtung (12) unter Berücksichtigung der Art der Befestigung der Anschlageinrichtung (12) und/oder unter Berücksichtigung des Anschlageinrichtungstyps zur Bewertung der Verbindungsqualität.
f) Vergleichen der mindestens einen Resonanzamplitude und der korrespondierenden Dämpfung mit mindestens einer zu der Referenzeigen- bzw. Referenzresonanzfrequenz korrespondierenden Resonanzamplitude und Dämpfung der Anschlageinrichtung (12) unter Berücksichtigung der Art der Befestigung der Anschlageinrichtung (12) und/oder unter Berücksichtigung des Anschlageinrichtungstyps zur Bewertung der Verbindungsqualität.

2. Verfahren nach dem vorstehenden Anspruch, **dadurch gekennzeichnet, dass** die externe Schwingungsanregung mittels einer Vorrichtung (10) durchgeführt wird, die zuvor fest mit der Anschlageinrichtung (12) verbunden wird.

3. Verfahren nach einem der vorstehenden Ansprüche, **dadurch gekennzeichnet, dass** die Schwingungsanregung über mindestens ein kontinuierliches Frequenzband erfolgt.

4. Verfahren nach einem der vorstehenden Ansprüche, **dadurch gekennzeichnet, dass** zum Ermitteln und/oder zum Vergleichen Daten per Kabel (26) und/oder drahtlos an ein Endgerät (28) und/oder eine zentrale Datenbank übermittelt und dort verarbeitet werden.

5. Verfahren nach einem der vorstehenden Ansprüche, **dadurch gekennzeichnet, dass** mindestens eine ermittelte Eigenfrequenz dazu genutzt wird, durch Vergleichen mit bekannten Eigenfrequenzen den Anschlageinrichtungstyp und/oder die Art der Befestigung einer Anschlageinrichtung (12) zu ermitteln.

6. Vorrichtung zur Bewertung der Verbindungsqualität zwischen einer mit einem Ende an einer baulichen Einrichtung (14) befestigten installierten Anschlageinrichtung (12) und einer baulichen Einrichtung (14) umfassend mindestens einen Aktor (32) zur externen Schwingungsanregung der Anschlageinrichtung (12) sowie mindestens einen Kraftsensor (34) zum Messen der in die Anschlageinrichtung eingebrachten Kräfte und mindestens einen Beschleunigungssensor (34, 44) zum Messen der aus der externen Schwingungsanregung der Anschlageinreichung (12) resultierenden Schwingungen zur Ermittlung des Übertragungsfrequenzgangs der Anschlageinrichtung (12), **dadurch gekennzeichnet, dass** der mindestens eine Aktor (32), der mindestens eine Kraftsensor (34) und der mindestens eine Beschleunigungssensor (34, 44) in einem gemeinsamen Gehäuse angeordnet sind.

7. Vorrichtung nach dem vorstehenden Anspruch, **dadurch gekennzeichnet, dass** mindestens zwei Beschleunigungssensoren (34, 44) in derselben horizontalen Ebene angeordnet sind, deren Messrichtung orthogonal zueinander stehen, um den Effekt der Richtungsorientierung der Anschlageinrichtung (12) zu erfassen.

8. Vorrichtung nach einem der beiden vorstehenden Ansprüche, **dadurch gekennzeichnet, dass**
a) die Vorrichtung (10) und/oder ein mit der Vorrichtung (10) kommunizierendes Endgerät (28) und/oder eine Datenbank einen Datenspeicher mit mindestens einem gespeicherten Referenzübertragungsfrequenzgang aufweist
und/oder
b) die Vorrichtung (10) und/oder ein mit der Vorrichtung (10) kommunizierendes Endgerät (28) und/oder eine Datenbank eine Schnittstelle zur drahtlosen Übertragung von Daten aufweist.

9. Vorrichtung zumindest nach Variante a) des vorstehenden Anspruchs, **dadurch gekennzeichnet, dass** die Vorrichtung (10) dazu ausgebildet ist, eine erste Eigen- bzw. Resonanzfrequenz, deren Resonanzamplitude und die korrespondierende Dämpfung einer ersten Ordnung und mindestens eine zweite Eigen- bzw. Resonanzfrequenz, deren Resonanzamplitude und die korrespondierende Dämpfung einer weiteren Ordnung mit entsprechenden Referenzwerten einer Datenbank zu vergleichen.

10. Vorrichtung nach einem der vier vorstehenden Ansprüche, **dadurch gekennzeichnet, dass** in dem Gehäuse (24) ein Energiespeicher zur Energieversorgung des Aktors (32) und/oder des Kraftsensors (34) und/oder des mindestens einen Beschleunigungssensors (34, 44) angeordnet ist.

11. Vorrichtung nach einem der fünf vorstehenden Ansprüche, **dadurch gekennzeichnet, dass** eine Befestigungsvorrichtung (22) vorgesehen ist, um die Vorrichtung (10) fest mit der Anschlageinrichtung (12) verbinden zu können.

12. Vorrichtung nach einem der sechs vorstehenden Ansprüche, **dadurch gekennzeichnet, dass** der mindestens eine Beschleunigungssensor (34, 44) zur Ermittlung von Biegeschwingungen geeignet und ausgelegt ist.

13. Vorrichtung nach einem der sieben vorstehenden Ansprüche, **dadurch gekennzeichnet, dass** der mindestens eine Aktor (32) so ausgebildet und angeordnet ist, dass er mit der Anschlageinrichtung (12) verbindbar ist und diese berührungsbehaftet in Schwingung versetzen kann.

14. Vorrichtung nach einem der acht vorstehenden Ansprüche, **dadurch gekennzeichnet, dass** der mindestens eine Aktor (32) dazu ausgebildet ist, eine zu überprüfende Anschlageinrichtung (12) durch eine steuerbare, translatorische Bewegung in Schwingung zu versetzen.

15. Vorrichtung nach einem der neun vorstehenden Ansprüche, **dadurch gekennzeichnet, dass** eine Kamera und/oder eine Ortungsfunktion vorgesehen ist.

## Claims

1. A method for assessing the connection quality between an anchor device (12) with one end attached to a structure (14) and the structure (14), comprising the following method steps:
a) externally exciting vibrations of the anchor device (12) in a state attached to the structure (14) with various excitation frequencies,
b) measuring the forces applied to the anchor device (12) and the resulting vibrations and calculating the transmission frequency response of the anchor device (12),
c) determining at least one eigen- or resonance frequency of the anchor device (12) on the basis of the transmission frequency response,
d) determining the resonance amplitude of the transmission frequency response and the corresponding attenuation of the previously determined at least one eigen- or resonance frequency of the anchor device (12),
e) comparing the at least one determined eigen- or resonance frequency with at least one reference eigen- or resonance frequency of the anchor device (12), taking into account the type of attachment of the anchor device (12) and/or taking into account the type of the anchor device for assessing the connection quality,
f) comparing the at least one resonance amplitude and the corresponding attenuation with at least one resonance amplitude and attenuation of the anchor device (12) corresponding to the reference eigen- or resonance frequency, taking into account the type of attachment of the anchor device (12) and/or taking into account the type of the anchor device for assessing the connection quality.

2. The method according to the preceding claim, **characterised in that** the external vibration excitation is performed by a device (10) that is previously firmly connected to the anchor device (12).

3. The method according to any one of the preceding claims, **characterised in that** the vibration excitation is carried out across at least one continuous frequency band.

4. The method according to any one of the preceding claims, **characterised in that** for determining and/or comparing data are transferred to a terminal device (28) and/or a central database via cable (26) and/or wirelessly and processed there.

5. The method according to any one of the preceding claims, **characterised in that** at least one determined eigenfrequency is used to determine the type of anchor device and/or the type of attachment of an anchor device (12) by comparison with known eigenfrequencies.

6. A device for assessing the connection quality between an anchor device (12) with one end attached to a structure (14) and a structure (14), comprising at least one actuator (32) for externally exciting vibrations of the anchor device (12) and at least one force sensor (34) for measuring the forces applied to the anchor device and at least one acceleration sensor (34, 44) for measuring the vibrations resulting from the external vibration excitation of the anchor device (12) for determining the transmission frequency response of the anchor device (12), **characterised in that** the at least one actuator (32), the at least one force sensor (34) and the at least one acceleration sensor (34, 44) are arranged in a common housing.

7. The device according to the preceding claim, **characterised in that** at least two acceleration sensors (34, 44) are arranged in the same horizontal plane with measuring directions orthogonal to each other for detecting the effect of the directional orientation of the anchor device (12).

8. The device according to any one of the two preceding claims, **characterised in that**
a) the device (10) and/or a terminal device (28) communicating with the device (10) and/or a database have a data store with at least one stored reference transmission frequency response
and/or
b) the device (10) and/or a terminal device (28) communicating with the device (10) and/or a database have an interface for the wireless transmission of data.

9. The device at least according to variant a) of the preceding claim, **characterised in that** the device (10) is configured to compare a first eigen- or resonance frequency, its resonance amplitude and the corresponding attenuation of a first order and at least a second eigen- or resonance frequency, its resonance amplitude and the corresponding attenuation of another order with corresponding reference values of a database.

10. The device according to any one of the four preceding claims, **characterised in that** an energy store for supplying power to the actuator (32) and/or the force sensor (34) and/or the at least one acceleration sensor (34, 44) is arranged in the housing (24).

11. The device according to any one of the five preceding claims, **characterised in that** a fastening device (22) is provided to be able to firmly connect the device (10) to the anchor device (12).

12. The device according to any one of the six preceding claims, **characterised in that** the at least one acceleration sensor (34, 44) is suited and designed for determining bending vibrations.

13. The device according to any one of the seven preceding claims, **characterised in that** the at least one actuator (32) is configured and arranged to be connectable to the anchor device (12) and to be able to vibrate it in a contact-based manner.

14. The device according to any one of the eight preceding claims, **characterised in that** the at least one actuator (32) is configured to vibrate an anchor device (12) to be checked by a controllable translational movement.

15. The device according to any one of the nine preceding claims, **characterised in that** a camera and/or a location function is provided.

## Revendications

1. Procédé permettant d'évaluer la qualité de liaison entre un dispositif de levage (12), fixé par une extrémité à un dispositif structurel (14), et le dispositif structurel (14), comprenant les étapes de procédé ci-dessous :
a) exciter le dispositif de levage (12) de manière externe par des oscillations avec des fréquences d'excitation différentes, dans un état où il est fixé au dispositif structurel (14),
b) mesurer les forces introduites dans le dispositif de levage (12) et les oscillations qui en résultent et calculer la réponse fréquentielle de transmission du dispositif de levage (12),
c) déterminer au moins une fréquence naturelle ou de résonance du dispositif de levage (12) en se basant sur la réponse fréquentielle de transmission,
d) déterminer l'amplitude de résonance de la réponse fréquentielle de transmission et l'amortissement correspondant de la au moins une fréquence naturelle ou de résonance préalablement déterminée du dispositif de levage (12),
e) comparer la au moins une fréquence naturelle ou de résonance déterminée avec au moins une fréquence naturelle ou de résonance de référence du dispositif de levage (12) en tenant compte du type de fixation du dispositif de levage (12) et/ou en tenant compte du type de dispositif de levage pour évaluer la qualité de la liaison,
f) comparer la au moins une amplitude de résonance et l'amortissement correspondant avec au moins une amplitude de résonance et un amortissement, correspondant à la fréquence naturelle de référence ou à la fréquence de résonance de référence, du dispositif de levage (12), en tenant compte du type de fixation du dispositif de levage (12) et/ou en tenant compte du type de dispositif de levage afin d'évaluer la qualité de liaison.

2. Procédé selon la revendication précédente, **caractérisé en ce que** l'excitation externe par oscillations est mise en œuvre au moyen d'un dispositif (10) qui est préalablement solidaire du dispositif de levage (12).

3. Procédé selon l'une quelconque des revendications précédentes, **caractérisé en ce que** l'excitation par oscillations a lieu sur au moins une bande de fréquence continue.

4. Procédé selon l'une quelconque des revendications précédentes, **caractérisé en ce que** des données sont transmises par câble (26) et/ou sans fil à un terminal (28) et/ou à une base de données centrale et y sont traitées à des fins de détermination et/ou de comparaison.

5. Procédé selon l'une quelconque des revendications précédentes, **caractérisé en ce qu'**au moins une fréquence naturelle déterminée est utilisée pour déterminer le type de dispositif de levage et/ou le type de fixation d'un dispositif de levage (12) par comparaison avec des fréquences naturelles connues.

6. Dispositif permettant d'évaluer la qualité de la liaison entre un dispositif de levage (12) fixé par une extrémité à un dispositif structurel (14) et un dispositif structurel (14), comprenant au moins un actionneur (32) permettant une excitation externe par oscillations du dispositif de levage (12) et au moins un capteur de force (34) permettant de mesurer les forces introduites dans le dispositif de levage et au moins un capteur d'accélération (34, 44) permettant de mesurer les oscillations résultant de l'excitation externe par oscillations du dispositif de levage (12) afin de déterminer la réponse fréquentielle de transmission du dispositif de levage (12), **caractérisé en ce que** le au moins un actionneur (32), le au moins un capteur de force (34) et le au moins un capteur d'accélération (34, 44) sont agencés dans un boîtier commun.

7. Dispositif selon la revendication précédente, **caractérisé en ce qu'**au moins deux capteurs d'accélération (34, 44), dont les directions de mesure sont orthogonales l'une par rapport à l'autre, sont agencés dans le même plan horizontal afin de détecter l'effet de l'orientation directionnelle du dispositif de levage (12).

8. Dispositif selon l'une quelconque des deux revendications précédentes, **caractérisé en ce que**
a) le dispositif (10) et/ou un terminal (28) communiquant avec le dispositif (10) et/ou une base de données présente une mémoire de données avec au moins une réponse fréquentielle de transmission de référence stockée et/ou
b) le dispositif (10) et/ou un terminal (28) communiquant avec le dispositif (10) et/ou une base de données présente une interface permettant une transmission sans fil de données.

9. Dispositif au moins selon la variante a) de la revendication précédente, **caractérisé en ce que** le dispositif (10) est conçu pour comparer une première fréquence naturelle ou de résonance, son amplitude de résonance et l'amortissement correspondant d'un premier ordre et au moins une seconde fréquence naturelle ou de résonance, son amplitude de résonance et l'amortissement correspondant d'un autre ordre avec des valeurs de référence correspondantes d'une base de données.

10. Dispositif selon l'une quelconque des quatre revendications précédentes, **caractérisé en ce qu'**un accumulateur d'énergie permettant de fournir de l'énergie à l'actionneur (32) et/ou au capteur de force (34) et/ou au au moins un capteur d'accélération (34, 44) est agencé dans le boîtier (24).

11. Dispositif selon l'une quelconque des cinq revendications précédentes, **caractérisé en ce qu'**un dispositif de fixation (22) permettant de solidariser le dispositif (10) au dispositif de levage (12) est prévu.

12. Dispositif selon l'une quelconque des six revendications précédentes, **caractérisé en ce que** le au moins un capteur d'accélération (34, 44) est approprié et conçu pour déterminer des oscillations de flexion.

13. Dispositif selon l'une quelconque des sept revendications précédentes, **caractérisé en ce que** le au moins un actionneur (32) est réalisé et agencé de manière à pouvoir être relié au dispositif de levage (12) et à le faire osciller par contact.

14. Dispositif selon l'une quelconque des huit revendications précédentes, **caractérisé en ce que** le au moins un actionneur (32) est conçu pour, grâce à un mouvement de translation pouvant être commandé, mettre en oscillation un dispositif de levage (12) à vérifier.

15. Dispositif selon l'une quelconque des neuf revendications précédentes, **caractérisé en ce qu'**une caméra et/ou une fonction de localisation est prévue.
